# EUROPEAN PATENT APPLICATION

(11) **EP 4 443 931 A1**
(43) Date of publication of application: **09.10.2024**
(21) Application number: 22919995.5
(22) Date of filing: 12.12.2022
(51) Int. Cl.: H04W 16/28

(54) **METHOD FOR DETERMINING BEAM AND ELECTRONIC DEVICE**

(30) Priority: 14.01.2022 CN 202210044735; 30.01.2022 CN 202210114830
(71) Applicant: Huawei Technologies Co., Ltd., Shenzhen, Guangdong 518129 (CN)
(72) Inventor: JIAO, Ruicheng, Shenzhen, Guangdong 518129 (CN); HE, Hongli, Shenzhen, Guangdong 518129 (CN); LI, Xueru, Shenzhen, Guangdong 518129 (CN)
(74) Representative: Goddar, Heinz J.
(86) International application number: PCT/CN2022/138441
(87) International publication number: WO 2023/134362

(57) **Abstract**

This application provides a beam determining method and an electronic device, and relates to the communication field. In the method, if a first terminal device detects, on a first target resource, a first sequence bound to the first terminal device, the first terminal device determines that a beam for sending a first reference signal corresponding to the first target resource is a first target beam. The first terminal device does not distinguish a device that sends the first sequence. If a plurality of different devices send first sequences on the first target resource, a gain of receiving the first sequences can be improved, so that the first sequences do not fail to be received. Therefore, the devices that send the first sequences do not need to wait. This can reduce a delay.

## Description

This application claims priority to Chinese Patent Application No. 202210044735.9, filed with the China National Intellectual Property Administration on January 14, 2022 and entitled "SIDELINK BEAM TRAINING METHOD", and claims priority to Chinese Patent Application No. 202210114830.1, filed with the China National Intellectual Property Administration on January 30, 2022 and entitled "BEAM DETERMINING METHOD AND ELECTRONIC DEVICE", all of which are incorporated herein by reference in their entireties.

### TECHNICAL FIELD

This application relates to the communication field, and more specifically, to a beam determining method and an electronic device in the communication field.

### BACKGROUND

In a Wi-Fi system, an access point (access point, AP) and a terminal device need to perform beam pairing, and communicate with each other by using paired beams. Specifically, the access point may send beacon (beacon) frames in a plurality of directions by using different beams, and the terminal device omnidirectionally receives the beacon frames, measures and determines a beacon frame with good signal quality, and selects a resource from a resource pool to report a measurement result. Because a plurality of terminal devices may need to select resources in the resource pool, the plurality of terminal devices need to contend for the resources in the resource pool. If two terminal devices select a same resource to report the measurement result, at least one terminal device fails to report the measurement result, and needs to contend for a resource again to perform reporting. A delay for reporting by a terminal device that fails in contention is long, and transmission performance is affected.

### SUMMARY

Embodiments of this application provide a beam determining method and an electronic device, to reduce a delay and improve transmission performance.

According to a first aspect, a beam determining method is provided, where the method is applicable to a first terminal device, and the method includes: sending at least one first reference signal by using at least one first beam, where the at least one first reference signal corresponds to at least one first resource; and detecting a first sequence on the at least one first resource, where the first sequence has a binding relationship with the first terminal device, a resource on which the first sequence is received is a first target resource, a beam for sending a first reference signal corresponding to the first target resource is a first target beam, and the at least one first beam includes the first target beam.

In the foregoing solution, the at least one first reference signal sent by the first terminal device corresponds to the at least one first resource. If the first terminal device detects, on the first target resource, the first sequence bound to the first terminal device, the first terminal device determines that the beam for sending the first reference signal corresponding to the first target resource is the first target beam. This means that when different devices send, on the first target resource, a sequence to the first terminal device, the different devices may send the first sequence bound to the first terminal device, that is, the first sequence is unrelated to a device that sends the first sequence. Therefore, if two sending devices both send the first sequence on the first target resource, the first terminal device determines that the beam for sending the first reference signal corresponding to the first target resource is the first target beam. In other words, the first terminal device does not distinguish a device that sends the first sequence. If a plurality of different devices send first sequences on the first target resource, a gain of receiving the first sequence can be improved, so that the first sequences do not fail to be received. Therefore, the devices that send the first sequences do not need to wait. This can reduce a delay.

Optionally, the correspondence between the at least one first reference signal and the at least one first resource may be that one first reference signal corresponds to one first resource. In this way, the at least one first reference signal one-to-one corresponds to the at least one first resource.

Optionally, that the at least one first reference signal corresponds to the at least one first resource may be that one first reference signal corresponds to a plurality of first resources.

Optionally, that the at least one first reference signal corresponds to the at least one first resource may be that an index of each of the at least one first reference signal corresponds to each of the at least one first resource.

Optionally, each first resource is a resource used to report the first sequence.

Optionally, that the first sequence has a binding relationship with the first terminal device may be replaced with that the first sequence corresponds to the first terminal device, or may be replaced with that the first sequence is associated with the first terminal device, or may be replaced with that the first sequence is a sequence related to the first terminal device and a sequence unrelated to a second terminal device.

Optionally, a same first sequence may be detected on different first resources in the at least one first resource, or different sequences may be detected on different first resources. For example, the first terminal device may detect the first sequence on the first target resource, and detect a third sequence on a third target resource. There is a binding relationship between each of the first sequence and the third sequence and the first terminal device. In other words, if the first terminal device detects, on a first resource, any sequence bound to the first terminal device, the first terminal device may determine, as the first target beam, the beam for sending the first reference signal corresponding to the first resource.

Optionally, the first target beam may be one first beam or a plurality of first beams.

Optionally, the first terminal device and the second terminal device may be two terminal devices in an indoor commercial scenario. For example, the first terminal device is a mobile phone, and the second terminal device is a pair of VR glasses. For another example, the first terminal device is a mobile phone, and the second terminal device is a smart screen.

In some possible implementations, the method further includes: detecting a second sequence on the at least one first resource, where a resource on which the second sequence is received is the first target resource, and the second sequence has a binding relationship with the first terminal device.

In the foregoing solution, the first terminal device may detect the first sequence and the second sequence on a same first target resource, and each of the first sequence and the second sequence has a binding relationship with the first terminal device. The first terminal device determines, as the first target beam, the beam for sending the first reference signal corresponding to the first target resource.

In some possible implementations, the first sequence comes from a second terminal device, the second sequence comes from a third terminal device, and the first terminal device does not distinguish between a sending device for the first sequence and a sending device for the second sequence. The first terminal device does not distinguish between a sending device from which the first sequence comes and a sending device from which the second sequence comes. In this way, after the first terminal device receives the first sequence and the second sequence, the first terminal device does not discard any sequence, and the second terminal device and the third terminal device do not need to contend for reporting. Therefore, a reporting delay can be reduced.

In some possible implementations, the detecting a second sequence on the at least one first resource includes:
detecting the second sequence on each of the at least one first resource by using a first beam for sending a first reference signal corresponding to each first resource.

In the foregoing solution, the first terminal device may detect the second sequence based on the first beam for sending the first reference signal corresponding to each first resource. If signal quality of a first reference signal received by the second terminal device is better, a success rate of detecting the second sequence by using the first beam for sending the first reference signal is higher. In this way, the success rate of detecting the second sequence can be improved.

In some possible implementations, the detecting a first sequence on the at least one first resource includes: detecting the first sequence on each of the at least one first resource by using the first beam for sending the first reference signal corresponding to each first resource.

In the foregoing solution, the first terminal device may detect the first sequence based on the first beam for sending the first reference signal corresponding to each first resource. If signal quality of a first reference signal received by the second terminal device is better, a success rate of detecting the first sequence by using the first beam for sending the first reference signal is higher. In this way, the success rate of detecting the first sequence can be improved.

Optionally, the first sequence is the same as the second sequence.

Optionally, the first sequence is different from the second sequence.

In some possible implementations, each of the at least one first reference signal indicates an identifier of the first terminal device.

Optionally, information included in each of the at least one first reference signal may indicate the identifier of the first terminal device, or each first reference signal may include the identifier of the first terminal device.

Optionally, identifiers of the first terminal device included in all first reference signals are the same.

Optionally, the identifiers of the first terminal device indicated by all first reference signals are the same.

In some possible implementations, each first reference signal includes an identifier of a primary synchronization sequence and an identifier of a secondary synchronization sequence, the identifier of the primary synchronization sequence and the identifier of the secondary synchronization sequence indicate an identifier of a sidelink synchronization signal SLSS, and the identifier of the SLSS is the identifier of the first terminal device.

Optionally, identifiers of primary synchronization sequences included in all first reference signals are the same.

Optionally, identifiers of secondary synchronization sequences included in all first reference signals are the same.

Optionally, each first reference signal is an S-SSB, the identifier of the SLSS is determined based on the identifier of the primary synchronization sequence and the identifier of the secondary synchronization sequence in each S-SSB, and the determined identifier of the SLSS is determined as the identifier of the first terminal device.

In some possible implementations, a physical sidelink broadcast channel PSBCH in each first reference signal includes the identifier of the first terminal device.

In some possible implementations, a sidelink control channel associated with the at least one first reference signal includes an identifier of the first terminal device.

In some possible implementations, that the first sequence has a binding relationship with the first terminal device is specifically: The first sequence is determined based on the identifier of the first terminal device.

Optionally, the first terminal device may determine the first sequence based on the identifier of the first terminal device.

Optionally, the second terminal device may determine the first sequence based on the identifier of the first terminal device.

In some possible implementations, that the first sequence is determined based on the identifier of the first terminal device is specifically: The first sequence is determined in a sequence set through a modulo operation performed on N based on the identifier of the first terminal device, where N is a quantity of sequences included in the sequence set, the sequence set includes the first sequence, and N is a positive integer.

Optionally, the sequence set is configured by the network device or pre-configured.

In some possible implementations, that the first sequence has a binding relationship with the first terminal device is specifically: The first sequence is the secondary synchronization sequence in each first reference signal sent by the first terminal device, and secondary synchronization sequences in all first reference signals are the same.

In the foregoing solution, the secondary synchronization sequence in each first reference signal sent by the first terminal device may be directly used as the first sequence. In this way, the first terminal device does not need to additionally indicate the first sequence, and signaling overheads can be reduced.

Optionally, each first reference signal is an S-SSB.

In some possible implementations, each of the at least one first reference signal includes a frame sequence number for sending each first reference signal and a slot sequence number for sending each first reference signal.

In the foregoing solution, a resource for sending each first reference signal by the first terminal device may be a resource configured by the network device or a pre-configured resource. The resource configured by the network device or the pre-configured resource corresponds to the index of each first reference signal. The second terminal device may determine, based on the frame sequence number for sending each first reference signal and the slot sequence number for sending each first reference signal, the resource for sending each first reference signal by the first terminal device, and determine the index of each first reference signal based on the resource for sending each first reference signal.

In some possible implementations, a sidelink data channel associated with each of the at least one first reference signal includes an index of the first reference signal associated with the sidelink data channel.

In the foregoing solution, the second terminal device may determine an index of a target reference signal based on the sidelink data channel associated with the target reference signal.

In some possible implementations, a sidelink control channel associated with each of the at least one first reference signal includes an index of the first reference signal associated with the sidelink control channel.

In the foregoing solution, the second terminal device may determine an index of a target reference signal based on the sidelink control information associated with the target reference signal.

In some possible implementations, an index of each first reference signal indicates the first reference signal; and a first correspondence indicates that the index of each of the at least one first reference signal corresponds to each of the at least one first resource; and the first correspondence is configured by a network device or pre-configured.

In some possible implementations, a physical sidelink data channel associated with each of the at least one first reference signal indicates a first resource corresponding to an index of the first reference signal associated with the physical sidelink data channel.

In some possible implementations, a physical sidelink control channel associated with each of the at least one first reference signal indicates a first resource corresponding to an index of the first reference signal associated with the physical sidelink control channel.

In some possible implementations, the PSBCH included in each first reference signal indicates a first resource corresponding to the first reference signal in which the PSBCH is located.

In some possible implementations, the method further includes: sending sidelink control information by using the first target beam, where the sidelink control information includes an index of a target reference signal, and an identifier of a source address of the sidelink control information is the identifier of the first terminal device; and
sending at least one second reference signal on a resource associated with the sidelink control information, where
an identifier of a destination address of the sidelink control information is the identifier of the first terminal device, or an identifier of a destination address of the sidelink control information is a preset value.

In the foregoing solution, if the index of the reference signal included in the sidelink control information is the index of the target reference signal determined by the second terminal device, and the identifier of the destination address of the sidelink control information is the preset value or the identifier of the first terminal device, the second terminal device may switch the beam from a predefined beam to at least one second beam, to train the beam of the second terminal device, and determine a second target beam in the at least one second beam.

In some possible implementations, the method further includes:
sending at least one second reference signal on a second target resource corresponding to a target reference signal, where
the physical sidelink data channel associated with each of the at least one first reference signal indicates a second resource corresponding to the index of the first reference signal associated with the physical sidelink data channel, and the second resource corresponding to the index of the first reference signal associated with the physical sidelink data channel includes the second target resource; or
the physical sidelink control channel associated with each of the at least one first reference signal of at least one reference signal indicates a second resource corresponding to the index of the first reference signal associated with the physical sidelink control channel, and the second resource corresponding to the index of the first reference signal associated with the physical sidelink control channel includes the second target resource; or
the PSBCH included in each first reference signal indicates a second resource corresponding to the first reference signal in which the PSBCH is located, and the second resource corresponding to the first reference signal in which the PSBCH is located includes the second target resource.

In the foregoing solution, a resource associated with the at least one first reference signal may be at least one first resource used to report the first sequence, or may be at least one second resource used by the first terminal device to send the second reference signal. If the first terminal device receives the first sequence on the first target resource, the first terminal device may determine, as the first target beam, a beam for sending a target reference signal corresponding to the first target resource. In addition, the first terminal device determines the target reference signal based on the first target resource, and sends the at least one second reference signal on the second target resource corresponding to the target reference signal. The at least one second resource includes the second target resource. The second terminal device receives the at least one second reference signal by using the at least one second beam, and determines a second target beam of the second terminal device from the at least one second beam.

In this way, the first target beam and the second target beam are a pair of paired beams.

In some possible implementations, a pattern of the at least one first reference signal and/or a pattern of the at least one second reference signal are/is a pre-configured pattern corresponding to a first resource pool; or
a pattern of the at least one first reference signal and/or a pattern of the at least one second reference signal are/is a pattern that is configured by the network device and that corresponds to a first resource pool, where
the first resource pool includes each of the at least one first resource and each of at least one second resource.

According to a second aspect, a beam determining method is provided. The method is applicable to a second terminal device, and the method includes: receiving at least one first reference signal, where the at least one first reference signal corresponds to at least one first resource; determining a target reference signal from the at least one first reference signal; and sending a first sequence to a first terminal device on a first target resource corresponding to the target reference signal, where the first sequence has a binding relationship with the first terminal device.

In the foregoing solution, the at least one first reference signal sent by the first terminal device corresponds to the at least one first resource. If the first terminal device detects, on the first target resource, the first sequence bound to the first terminal device, the first terminal device determines that a beam for sending the first reference signal corresponding to the first target resource is the first target beam. This means that when different devices send, on the first target resource, a sequence to the first terminal device, the different devices may send the first sequence bound to the first terminal device, that is, the first sequence is unrelated to a device that sends the first sequence. Therefore, if two sending devices both send the first sequence on the first target resource, the first terminal device determines that the beam for sending the first reference signal corresponding to the first target resource is the first target beam. In other words, the first terminal device does not distinguish a device that sends the first sequence. If a plurality of different devices send first sequences on the first target resource, a gain of receiving the first sequence can be improved, so that the first sequences do not fail to be received. Therefore, the devices that send the first sequences do not need to wait. This can reduce a delay.

In some possible implementations, the sending a first sequence to a first terminal device on a first target resource corresponding to the target reference signal includes:
sending, by using a predefined beam, the first sequence to the first terminal device on the first target resource corresponding to the target reference signal.

In some possible implementations, each of the at least one first reference signal indicates an identifier of the first terminal device.

In some possible implementations, each first reference signal includes an identifier of a primary synchronization sequence and an identifier of a secondary synchronization sequence, the identifier of the primary synchronization sequence and the identifier of the secondary synchronization sequence indicate an identifier of a sidelink synchronization signal SLSS, and the identifier of the SLSS is the identifier of the first terminal device.

In some possible implementations, a physical sidelink broadcast channel PSBCH in each first reference signal includes the identifier of the first terminal device.

In some possible implementations, a sidelink control channel associated with the at least one first reference signal includes an identifier of the first terminal device.

In some possible implementations, that the first sequence has a binding relationship with the first terminal device is specifically: The first sequence is determined based on the identifier of the first terminal device.

In some possible implementations, that the first sequence is determined based on the identifier of the first terminal device is specifically: The first sequence is determined in a sequence set through a modulo operation performed on N based on the identifier of the first terminal device, where N is a quantity of sequences included in the sequence set, and the sequence set includes the first sequence.

In some possible implementations, that the first sequence has a binding relationship with the first terminal device is specifically: The first sequence is the secondary synchronization sequence in each first reference signal sent by the first terminal device, and secondary synchronization sequences in all first reference signals are the same.

In some possible implementations, each of the at least one first reference signal includes a frame sequence number for sending each first reference signal and a slot sequence number for sending each first reference signal, and the method further includes:
determining an index of the target reference signal based on a frame sequence number for sending the target reference signal and a slot sequence number for sending the target reference signal.

In some possible implementations, a sidelink data channel associated with each of the at least one first reference signal includes an index of the first reference signal associated with the sidelink data channel, or a sidelink control channel associated with each of the at least one first reference signal includes an index of the first reference signal associated with the sidelink control channel.

In some possible implementations, an index of each of the at least one first reference signal indicates the first reference signal; and
a first correspondence indicates that the index of each of the at least one first reference signal corresponds to the at least one first resource, and the first correspondence is configured by a network device or pre-configured; or
a physical sidelink data channel associated with each of the at least one first reference signal indicates a first resource corresponding to an index of the first reference signal associated with the physical sidelink data channel; or
a physical sidelink control channel associated with each of the at least one first reference signal indicates a first resource corresponding to an index of the first reference signal associated with the physical sidelink control channel; or
the PSBCH included in each first reference signal indicates a first resource corresponding to the first reference signal in which the PSBCH is located.

In some possible implementations, the method further includes:
receiving sidelink control information by using a predefined beam, where the sidelink control information includes the index of the target reference signal, and an identifier of a source address of the sidelink control information is the identifier of the first terminal device;
receiving at least one second reference signal on a resource associated with the sidelink control information by using at least one second beam; and
determining a second target beam of the second terminal device from the at least one second beam based on reference signal received power or a signal to interference plus noise ratio of the at least one second reference signal, where
an identifier of a destination address of the sidelink control information is the identifier of the first terminal device, or an identifier of a destination address of the sidelink control information is a preset value.

In some possible implementations, the method further includes:
receiving at least one second reference signal on a second target resource corresponding to the target reference signal by using at least one second beam; and
determining a second target beam of the second terminal device from the at least one second beam based on reference signal received power or a signal to interference plus noise ratio of the at least one second reference signal, where
the physical sidelink data channel associated with each of the at least one first reference signal indicates a second resource corresponding to the index of the first reference signal associated with the physical sidelink data channel, and the second resource corresponding to the index of the first reference signal associated with the physical sidelink data channel includes the second target resource; or
the physical sidelink control channel associated with each of the at least one first reference signal of at least one reference signal indicates a second resource corresponding to the index of the first reference signal associated with the physical sidelink control channel, and the second resource corresponding to the index of the first reference signal associated with the physical sidelink control channel includes the second target resource; or
the PSBCH included in each first reference signal indicates a second resource corresponding to the first reference signal in which the PSBCH is located, and the second resource corresponding to the first reference signal in which the PSBCH is located includes the second target resource.

In some possible implementations, a pattern of the at least one first reference signal and/or a pattern of the at least one second reference signal are/is a pre-configured pattern corresponding to a first resource pool; or
a pattern of the at least one first reference signal and/or a pattern of the at least one second reference signal are/is a pattern that is configured by the network device and that corresponds to a first resource pool, where
the first resource pool includes each of the at least one first resource and each of at least one second resource.

For other descriptions of the second aspect, refer to the descriptions of the first aspect. To avoid repetition, details are not described again.

According to a third aspect, this application provides an apparatus. The apparatus has a function of implementing behavior of each device according to the first aspect and the possible implementations of the first aspect. The function may be implemented by hardware, or may be implemented by executing corresponding software by hardware. The hardware or the software includes one or more modules or units corresponding to the foregoing function. For example, a determining module or unit, or a transceiver module or unit.

Optionally, the apparatus may be the foregoing first terminal device.

According to a fourth aspect, this application provides an apparatus. The apparatus has a function of implementing behavior of each device according to the second aspect and the possible implementations of the second aspect. The function may be implemented by hardware, or may be implemented by executing corresponding software by hardware. The hardware or the software includes one or more modules or units corresponding to the foregoing function. For example, a determining module or unit, or a transceiver module or unit.

Optionally, the apparatus may be the foregoing second terminal device.

According to a fifth aspect, this application provides an electronic device, where the apparatus includes a processor, the processor is coupled to a memory, the memory is configured to store a computer program or instructions, and the processor is configured to execute the computer program or the instructions stored in the memory, so that the method according to the first aspect and the possible implementations of the first aspect is performed.

For example, the processor is configured to execute the computer program or the instructions stored in the memory, so that the apparatus performs the method according to the first aspect and the possible implementations of the first aspect.

Optionally, the apparatus includes one or more processors.

Optionally, the apparatus may further include a memory coupled to the processor.

Optionally, the apparatus may include one or more memories.

Optionally, the memory and the processor may be integrated together or disposed separately.

Optionally, the apparatus may include a transceiver.

Optionally, the apparatus may be the foregoing first terminal device.

According to a sixth aspect, this application provides an electronic device, where the apparatus includes a processor, the processor is coupled to a memory, the memory is configured to store a computer program or instructions, and the processor is configured to execute the computer program or the instructions stored in the memory, so that the method according to the second aspect and the possible implementations of the second aspect is performed.

For example, the processor is configured to execute the computer program or the instructions stored in the memory, so that the apparatus performs the method according to the second aspect and the possible implementations of the second aspect.

Optionally, the apparatus includes one or more processors.

Optionally, the apparatus may further include a memory coupled to the processor.

Optionally, the apparatus may include one or more memories.

Optionally, the memory and the processor may be integrated together or disposed separately.

Optionally, the apparatus may include a transceiver.

Optionally, the apparatus may be the foregoing second terminal device.

According to a seventh aspect, this application provides an electronic device, including one or more processors, a memory, a plurality of applications, and one or more computer programs. The one or more computer programs are stored in the memory, and the one or more computer programs include instructions. When the instructions are executed by the electronic device, the electronic device is enabled to perform the beam determining method according to any one of the first aspect or the possible implementations of the first aspect, or the beam determining method described in any embodiment of this application.

Optionally, the electronic device may further include a touchscreen and/or a camera. The touchscreen includes a touch-sensitive surface and a display.

According to an eighth aspect, this application provides an electronic device, including one or more processors, a memory, a plurality of applications, and one or more computer programs. The one or more computer programs are stored in the memory, and the one or more computer programs include instructions. When the instructions are executed by the electronic device, the electronic device is enabled to perform the beam determining method according to any one of the second aspect or the possible implementations of the second aspect, or the beam determining method described in any embodiment of this application.

Optionally, the electronic device may further include a touchscreen and/or a camera. The touchscreen includes a touch-sensitive surface and a display.

According to a ninth aspect, this application provides a computer-readable storage medium, including computer instructions. When the computer instructions are run on an electronic device, the electronic device is enabled to perform the beam determining method according to any one of the foregoing aspects or the possible implementations of the foregoing aspects, or the beam determining method described in any embodiment of this application.

According to a tenth aspect, this application provides a computer program product. When the computer program product runs on an electronic device, the electronic device performs the beam determining method according to any one of the foregoing aspects or the possible implementations of the foregoing aspects, or the beam determining method described in any embodiment of this application.

According to an eleventh aspect, this application provides an apparatus, including units configured to perform the method described in any embodiment of this application.

### BRIEF DESCRIPTION OF DRAWINGS

FIG. 1 is a diagram of a communication system according to an embodiment of this application;
FIG. 2 is a diagram of training a beam in Wi-Fi according to an embodiment of this application;
FIG. 3 is a diagram of beams according to an embodiment of this application;
FIG. 4 is a diagram of a beam determining method according to an embodiment of this application;
FIG. 5 is a diagram of a first target resource according to an embodiment of this application;
FIG. 6 is a diagram of another beam determining method according to an embodiment of this application;
FIG. 7 is a diagram of still another beam determining method according to an embodiment of this application;
FIG. 8 is a diagram of a relationship between sequences, a resource, reference signals, and a beam according to an embodiment of this application;
FIG. 9 is a diagram of another relationship between sequences, a resource, reference signals, and a beam according to an embodiment of this application;
FIG. 10 is a diagram of still another relationship between sequences, a resource, reference signals, and a beam according to an embodiment of this application; and
FIG. 11 is a block diagram of a communication apparatus according to an embodiment of this application.

### DESCRIPTION OF EMBODIMENTS

The following describes the technical solutions in embodiments of this application with reference to the accompanying drawings in embodiments of this application.

It should be understood that, division into manners, cases, categories, and embodiments in embodiments of this application is only for ease of description, and should not constitute a special limitation. Features in various manners, categories, cases, and embodiments may be combined without contradiction.

It should be further understood that "first", "second", and "third" in embodiments of this application are only used for distinguishing, and should not constitute any limitation on this application. For example, "first sequence" and "second sequence" indicate a same sequence, and may also indicate different sequences. It should be further understood that sequence numbers of the processes do not mean execution sequences in embodiments of this application. The execution sequences of the processes need be determined based on functions and internal logic of the processes, and should not constitute any limitation on implementation processes of embodiments of this application.

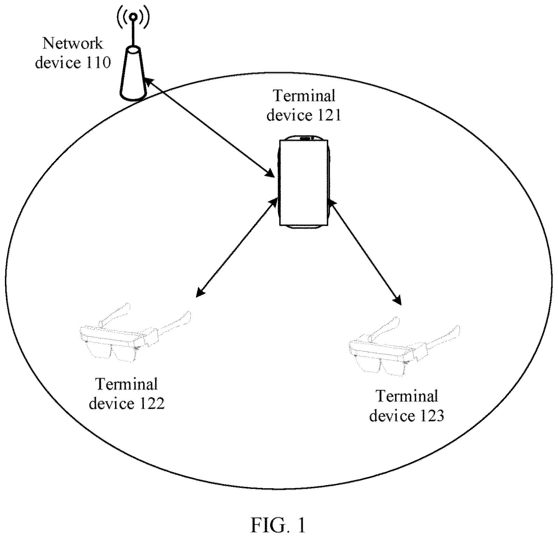

FIG. 1 is a diagram of a communication system. The communication system may include one or more network devices, for example, a network device 110 in FIG. 1. The communication system further includes a plurality of terminal devices, for example, a terminal device 121, a terminal device 122, and a terminal device 123 in FIG. 1. The terminal device 121, the terminal device 122, and the terminal device 123 each may communicate with the network device 110. For example, in FIG. 1, the network device 110 communicates with the terminal device 121. A link on which the terminal device 121 sends data to the network device 110 is referred to as an uplink (uplink), and a link on which the terminal device 121 receives data sent by the network device 110 is referred to as a downlink (downlink). The terminal device 121 may directly communicate with the terminal device 122, or the terminal device 121 may directly communicate with the terminal device 123. A link for transmitting data between the terminal device 121 and the terminal device 122 is referred to as a sidelink (sidelink), and a link for transmitting data between the terminal device 121 and the terminal device 123 is referred to as a sidelink (sidelink). For example, the terminal device 121 may send data to the terminal device 122 through the sidelink, and the terminal device 122 may send data to the terminal device 121 through the sidelink. For another example, the terminal device 121 sends data to the terminal device 123 through the sidelink, and the terminal device 123 may send data to the terminal device 121 through the sidelink. The sidelink is generally used in a scenario in which direct communication can be performed between devices, for example, a vehicle to everything (vehicle to everything, V2X) or a device to device (device to device, D2D). V2X communication may be considered as a special case of D2D communication.

A new radio (new radio, NR) access technology is a current mainstream wireless communication technology. For a V2X service feature and a new service requirement, the new radio access technology can support V2X communication with a lower delay and higher reliability. V2X is a basis and key technology of a smart vehicle, autonomous driving, and an intelligent transportation system. V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The NR access technology may also be applied to an indoor commercial scenario. A plurality of terminal devices in the indoor scenario may transmit data to each other, and a requirement for a data transmission rate may be high. As shown in FIG. 1, the terminal device 121 is a mobile phone, the terminal device 122 and the terminal device 123 each are a pair of virtual reality (virtual reality, VR) glasses, and the mobile phone may transmit a VR video to the two pairs of VR glasses. For another example, the terminal device 121 is a mobile phone, the terminal device 122 and the terminal device 123 each are a smart screen, and the mobile phone needs to project a played picture to the two smart screens. For another example, the terminal device 121 is customer premises equipment (customer premise equipment, CPE), and the terminal device 122 is a mobile phone.

The terminal device 121, the terminal device 122, or the terminal device 123 may be at a fixed position, or may be movable. FIG. 1 is only a diagram. The communication system may further include other network devices, for example, may further include a wireless relay device and a wireless backhaul device. This is not shown in FIG. 1. Types and quantities of network devices and terminal devices included in the mobile communication system are not limited in embodiments of this application.

In a communication system, the terminal device 121, the terminal device 122, or the terminal device 123 accesses the network device in the mobile communication system in a wireless manner. The network device 110 may be a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), a gNB in an NR system, or an assembly or a part of a device included in a base station, for example, a central unit (central unit, CU), a distributed unit (distributed unit, DU), or a baseband unit (baseband unit, BBU).

The terminal device 121 or the terminal device 122 in the communication system may also be referred to as a terminal, user equipment (user equipment, UE), a mobile station (mobile station, MS), a mobile terminal (mobile terminal, MT), or the like. The terminal device in embodiments of this application may be a mobile phone (mobile phone), a tablet computer (Pad), or a computer with a wireless transceiver function, or may be a wireless terminal used in scenarios such as virtual reality (virtual reality, VR), augmented reality (augmented reality, AR), industrial control (industrial control), self driving (self driving), telemedicine (telemedicine), a smart grid (smart grid), transportation safety (transportation safety), a smart city (smart city), and a smart home (smart home). In this application, the terminal device and a chip applicable to the terminal device are collectively referred to as a terminal device. It should be understood that a specific technology and a specific device form used for the terminal device are not limited in embodiments of this application.

It should be understood that, for ease of understanding only, FIG. 1 shows an example of the terminal device 121, the terminal device 122, the terminal device 123, and the network device 110. However, this should not constitute any limitation on this application. The wireless communication system may further include more network devices, or may include more or fewer terminal devices. This is not limited in this application.

In the indoor commercial scenario, the network device 110 may pre-configure some functions. For example, the network device 110 may configure and send at least one first reference signal resource, or configure a correspondence between at least one first reference signal and at least one first resource.

A resource used when the terminal device 121 transmits data to the terminal device 122 may be scheduled by the network device, or may be automatically sensed (sensed) by the terminal device 122 or the terminal device 121. A resource used when the terminal device 121 transmits data to the terminal device 123 may be scheduled by the network device, or may be automatically sensed by the terminal device 123 or the terminal device 121.

Optionally, FIG. 1 may not include the network device 110. FIG. 1 may include the terminal device 121, the terminal device 122, and the terminal device 123. Communication between the terminal device 121, the terminal device 122, and the terminal device 123 may not require assistance of the network device.

The following describes terms in this application in detail.

### 1. Beam (beam)

The beam may be referred to as a spatial domain filter (spatial domain filter), or may be referred to as a spatial filter (spatial filter) or a spatial parameter (spatial parameter). A beam for sending a signal may be referred to as a transmission beam (transmission beam, Tx beam), or may be referred to as a spatial domain transmission filter (spatial domain transmission filter) or a spatial transmission parameter (spatial transmission parameter). A beam used to receive a signal may be referred to as a reception beam (reception beam, Rx beam), or may be referred to as a spatial domain receive filter (spatial domain receive filter) or a spatial receive parameter (spatial Rx parameter). The beam for sending a signal and the beam used to receive a signal may be a same beam or may be different beams.

The transmission beam may refer to distribution of signal strength formed in different directions in space after a signal is transmitted via an antenna, and the reception beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

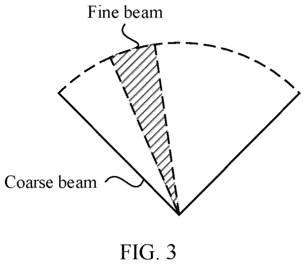

Optionally, the wide beam may also be referred to as a coarse beam, or may be referred to as an omnidirectional beam or a pseudo omnidirectional beam. Optionally, the narrow beam may also be referred to as a fine beam or a sub-beam (sub-beam). Optionally, the fine beam may be a component, a subcomponent, or a beam component (beam component) of a coarse beam. As shown in FIG. 3, the fine beam may be a sub-direction of a coarse beam or L degrees of a beam, for example, L=5.

Optionally, a plurality of beams having a same communication characteristic or similar communication characteristics are considered as one beam. One beam may include one or more antenna ports, configured to transmit a data channel, a control channel, a reference signal (such as an S-SSB, a CSI-RS, and a DMRS), and the like. The one or more antenna ports forming one beam may also be considered as one antenna port set.

Optionally, one beam corresponds to an index of the beam. Therefore, an index of one beam may be used to uniquely identify the beam.

### 2. Sidelink synchronization signal block (sidelink synchronization signal block, S-SSB)

The S-SSB includes a sidelink primary synchronization signal (sidelink primary synchronization signal, S-PSS), a secondary synchronization signal (sidelink secondary synchronization signal, S-SSS), a physical sidelink broadcast channel (physical sidelink broadcast channel, PSBCH), and a demodulation reference signal (demodulation reference signal, DMRS) required for demodulating the PSBCH. The S-PSS and the S-SSS are used to perform synchronization with a terminal device, including timing synchronization, frame synchronization, and symbol synchronization. The PSBCH carries content of master system information (master information block, MIB).

In an indoor commercial scenario, Wi-Fi is a main technology in the indoor commercial scenario. In a Wi-Fi system, an access point (access point, AP) and a terminal device need to perform beam pairing, and communicate with each other by using paired beams. Specifically, the access point may send beacon (beacon) frames in a plurality of directions by using different beams, and the terminal device receives the beacon frames, measures and determines a beacon frame with good signal quality, and selects a resource from a resource pool to report a measurement result. Because a plurality of terminal devices may select a resource in the resource pool, if two terminal devices select a same resource to report the measurement result, at least one terminal device fails to report the measurement result, and needs to contend for a resource again to perform reporting. In this case, a delay for reporting by a terminal device that fails in contention is long, and transmission performance is affected.

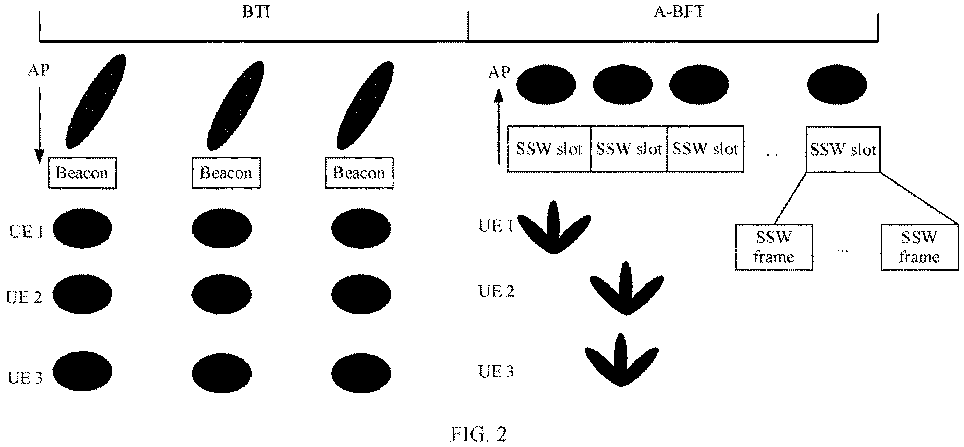

For example, in 802.11 ad, the AP separately sends a beacon (beacon) in a plurality of directions by using different beams in a beacon transmission interval (beacon transmission interval, BTI) in a beacon interval (beacon interval, BI), as shown in FIG. 2. The beacon includes configuration information, the configuration information is used to configure a system parameter, and the system parameter includes a system parameter in an association beamforming training (association beamforming training, A-BFT) phase. For example, the system parameter in the A-BFT phase indicates whether there is the A-BFT phase after BTI. If there is the A-BFT phase, the configuration information is further used to configure a quantity of sector level sweep (sector level sweep, SSW) slots (slots) included in the A-BFT phase and a quantity of SSW frames (frames) in the SSW slots. A plurality of SSW frames in an SSW slot need to be configured by using the configuration information, and the plurality of SSW frames are used by the UE to sweep and send a measurement result. In addition, the beacon includes a corresponding antenna identifier and sector identifier for sending the beacon. UE 1, UE 2, and UE 3 separately receive a beacon by using an omnidirectional beam and measure reference signal received power (reference signal received power, RSRP). In the A-BFT phase, the UE 1, the UE 2, and the UE 3 contend for SSW slots of a plurality of reporting beams, and separately use different beams to sweep and report measurement results in a plurality of SSW frames included in the SSW slots. The measurement result includes an antenna identifier and a sector identifier of a beacon with highest RSRP. The AP receives an SSW frame of each UE by using an omnidirectional beam, where the SSW frame of each UE includes a measurement result, the measurement result includes an antenna identifier and a sector identifier of the AP, the SSW frame of each UE further includes an antenna identifier of an antenna and a sector identifier of a sector that are used by each UE to send the SSW frame, and the AP determines a beam of the AP based on the antenna identifier and the sector identifier that are of the AP and that are included in the measurement result. In addition, the AP determines a beam of each UE based on received energy of the SSW frame of each UE and the antenna identifier of the antenna and the sector identifier of the sector that are used by each UE to send the SSW frame in the SSW frame of each UE, and separately indicates the determined beam of each UE to each UE. In this way, a beam training process between the AP and each of the UE 1, the UE 2, and the UE 3 may be completed. As shown in FIG. 2, both the UE 2 and the UE 3 contend for reporting a measurement result in a second SSW slot. Therefore, a conflict occurs when the UE 2 and the UE 3 perform reporting in each SSW frame in the second SSW slot. This causes a reporting failure for at least one UE. The UE that fails to perform reporting needs to wait for a next A-BFT phase for performing reporting. Because an A-BFT is configured after a BTI, and an A-BFT is not configured after a BTI, if an A-BFT phase is not configured after a next BTI after the A-BFT phase shown in FIG. 2, the UE that fails to perform reporting needs to continue to wait. This can cause a long reporting delay. In addition, an SSW slot is not selected by one specific UE. This also can cause a waste of an SSW frame configured in the SSW slot. Further, because the UE 1, the UE 2, and the UE 3 need to report measurement results by using different beams, and the different beams correspond to different SSW frames in an SSW slot, the configuration information in the beacon needs to configure a plurality of SSW frames for one SSW slot, so that the UEs separately report measurement results in the plurality of SSW frames by using different beams. This also causes a longer delay in reporting the measurement results.

The following describes the method in embodiments of this application. The following first terminal device may be the terminal device 121 in FIG. 1, and the second terminal device may be the terminal device 122 in FIG. 1.

In this embodiment of this application, the at least one first reference signal sent by the first terminal device corresponds to the at least one first resource. If the first terminal device detects, on the first target resource, the first sequence bound to the first terminal device, the first terminal device determines that a beam for sending the first reference signal corresponding to the first target resource is the first target beam. This means that when different devices send, on the first target resource, a sequence to the first terminal device, the different devices may send the first sequence bound to the first terminal device, that is, the first sequence is unrelated to a device that sends the first sequence. Therefore, if two sending devices both send the first sequence on the first target resource, the first terminal device determines that the beam for sending the first reference signal corresponding to the first target resource is the first target beam. In other words, the first terminal device does not distinguish a device that sends the first sequence. If a plurality of different devices send first sequences on the first target resource, a gain of receiving the first sequence can be improved, so that the first sequences do not fail to be received, and the device that sends the first sequences do not need to wait. This can reduce a delay.

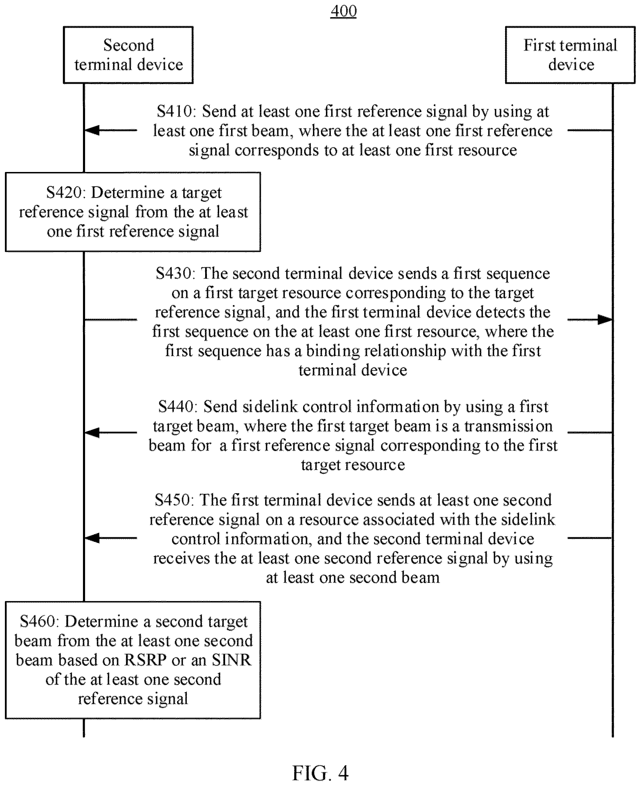

The following describes a beam determining method 400 in an embodiment of this application with reference to FIG. 4. As shown in FIG. 4, the method 400 includes the following steps.

S410: A first terminal device sends at least one first reference signal by using at least one first beam, and a second terminal device receives the at least one first reference signal, where the at least one first reference signal corresponds to at least one first resource.

Optionally, at least one first beam corresponds to the at least one first reference signal.

Optionally, one first beam corresponds to one first reference signal, and the at least one first beam one-to-one corresponds to the at least one first reference signal. In other words, a quantity of first reference signals may be equal to a quantity of first beams. In this way, after determining a first reference signal, the first terminal device may determine a first target beam corresponding to the first reference signal.

Optionally, one first beam may correspond to a plurality of first reference signals. In other words, a quantity of first reference signals may be greater than a quantity of first beams. In this way, after determining one of the plurality of first reference signals, the first terminal device may determine a first target beam corresponding to the first reference signal. For example, a beam 1 corresponds to a reference signal 1, a reference signal 2, and a reference signal 3, and a beam 2 corresponds to a reference signal 4, a reference signal 5, and a reference signal 6. In this way, after determining the reference signal 5, the first terminal device may determine that the beam 2 is the first target beam.

Optionally, an index of one beam may indicate the beam. If there are S first beams, there may be S indexes. The S indexes may respectively indicate the S first beams, and S is a positive integer. Optionally, the index of the beam may be replaced with an identifier of the beam.

Optionally, an index of one first reference signal may indicate the first reference signal.

If there are M first reference signals, there may be M indexes. The M indexes may respectively indicate the M first reference signals, and M is a positive integer. Optionally, the index of the first reference signal may be replaced with an identifier of the first reference signal.

Optionally, a correspondence between the at least one first beam and the at least one first reference signal may be a correspondence between an index of the at least one first beam and an index of the at least one first reference signal. For example, if there are S first beams and M first reference signals, a correspondence between the S first beams and the M first reference signals may be a correspondence between S indexes and M indexes.

Optionally, a resource used by the first terminal device to send the at least one first reference signal may be pre-configured, and a resource used by the second terminal device to receive the at least one first reference signal may be pre-configured. Optionally, a pre-configuration may be a setting before factory.

Optionally, a network device may configure the resource used by the first terminal device to send the at least one first reference signal, and the resource that is used by the first terminal device to send the at least one first reference signal and that is configured by the network device is also the resource used by the second terminal device to receive the at least one first reference signal. For example, if the first terminal device is the terminal device 121 in FIG. 1, and the second terminal device is the terminal device 122, the network device 110 may configure, for the terminal device 121, a resource for sending the at least one first reference signal, and the network device 110 may configure, for the terminal device 122, a resource for receiving the at least one first reference signal. The terminal device 121 sends the at least one first reference signal on the resource configured by the network device, and the terminal device 122 receives the at least one first reference signal on the resource configured by the network device.

Optionally, a pattern (pattern) of the at least one first reference signal may be a pre-configured pattern corresponding to a first resource pool. Optionally, a pre-configuration may be a setting before factory. Optionally, the first terminal device may send, on the resource configured by the network device or on a pre-configured resource, the at least one first reference signal based on the pre-configured pattern of the at least one first reference signal, and the second terminal device may receive, on the resource configured by the network device or on the pre-configured resource, the at least one first reference signal based on the pre-configured pattern of the at least one first reference signal.

Optionally, a pattern (pattern) of the at least one first reference signal may be a pattern that is configured by the network device and that corresponds to a first resource pool. Optionally, the first terminal device may send, on the resource configured by the network device or on a pre-configured resource, the at least one first reference signal based on the pattern of the at least one first reference signal configured by the network device, and the second terminal device may receive, on the resource configured by the network device or on the pre-configured resource, the at least one first reference signal based on the pattern of the at least one first reference signal configured by the network device.

Optionally, the first resource pool includes each of the at least one first resource. Optionally, the first resource pool includes a resource that is configured by the network device and that is for sending the at least one first reference signal.

Optionally, the at least one first reference signal may be an S-SSB.

Optionally, the at least one first reference signal may be a CSI-RS.

Optionally, the at least one first reference signal may be a DMRS.

Optionally, the resource used by the first terminal device to send the at least one first reference signal may be associated with sidelink control information (sidelink control information, SCI) sent by the first terminal device to the second terminal device. The first terminal device may send the SCI to the second terminal device, the first terminal device may send the at least one first reference signal on a resource associated with the SCI, and the second terminal device may receive the at least one first reference signal on the resource associated with the SCI.

Optionally, that the at least one first reference signal corresponds to the at least one first resource may be that one first reference signal corresponds to one first resource. In this way, the at least one first reference signal one-to-one corresponds to the at least one first resource.

Optionally, that the at least one first reference signal corresponds to the at least one first resource may be that one first reference signal corresponds to a plurality of first resources.

Optionally, that the at least one first reference signal corresponds to the at least one first resource may be that an index of each of the at least one first reference signal corresponds to each of the at least one first resource.

Optionally, a PSCCH associated with each first reference signal may include an index of the first reference signal associated with the PSCCH.

Optionally, a PSSCH associated with each first reference signal may include an index of the first reference signal associated with the PSSCH.

Optionally, each first reference signal includes a frame sequence number for sending each first reference signal and a slot sequence number for sending each first reference signal. If a resource for sending each first reference signal is configured by the network device or pre-configured, different first reference signals correspond to different resources, that is, different first reference signals correspond to different frame sequence numbers and/or different slot sequence numbers. In other words, each resource configured by the network device or pre-configured corresponds to the index of each first reference signal. The second terminal device may determine, based on the frame sequence number for sending each first reference signal and the slot sequence number for sending each first reference signal, the resource for sending each first reference signal by the first terminal device, and determine the index of each first reference signal based on the resource for sending each first reference signal.

Optionally, the first terminal device and the second terminal device may learn, in any one of the following four manners, that the at least one first reference signal corresponds to the at least one first resource.

Manner 1: A first correspondence indicates that each of the at least one first reference signal corresponds to each of the at least one first resource.

Optionally, the first correspondence may be pre-configured. Optionally, a pre-configuration may be a setting before delivery.

Optionally, the network device may configure the first correspondence for the first terminal device and the second terminal device. For example, if the first terminal device is the terminal device 121 in FIG. 1, and the second terminal device is the terminal device 122, the network device 110 may configure the first correspondence for the terminal device 121 and the terminal device 122.

Manner 2: A physical sidelink control channel (physical sidelink control channel, PSCCH) associated with each of the at least one first reference signal indicates a first resource corresponding to an index of the first reference signal associated with the PSCCH.

Optionally, each first reference signal may be carried on a physical sidelink shared channel (physical sidelink share channel, PSSCH), and SCI carried on a PSCCH associated with the PSSCH carrying each first reference signal may indicate a first resource corresponding to an index of the first reference signal associated with the PSCCH. In other words, the PSCCH is used to schedule the PSSCH, and the PSCCH used to schedule the PSSCH may carry the first resource corresponding to the index of the first reference signal associated with the PSCCH. For example, first-phase sidelink control information (sidelink control information, SCI 1) in the PSCCH may indicate the first resource corresponding to the index of the first reference signal associated with the PSCCH.

Optionally, each first reference signal may be carried on a PSCCH, and the PSCCH that carries each first reference signal may also carry SCI. The SCI may indicate the first resource corresponding to the index of the first reference signal carried by the PSCCH. In other words, the PSCCH may carry each first reference signal, or may indicate the first resource corresponding to the index of the first reference signal carried by the PSCCH. For example, the SCI 1 in the PSCCH may indicate the first resource corresponding to the index of the first reference signal carried by the PSCCH.

Manner 3: A PSSCH associated with each of the at least one first reference signal indicates a first resource corresponding to an index of the first reference signal associated with the PSSCH.

Optionally, each first reference signal may be carried in the PSSCH, the PSSCH may further carry SCI 2, and the SCI 2 carried in the PSSCH may indicate a first resource corresponding to an index of the first reference signal carried in the PSSCH. The SCI 2 is a second-phase sidelink control information (sidelink control information, SCI 2).

Optionally, each first reference signal may be carried in a PSCCH, the PSCCH is used to schedule the PSSCH, and the PSSCH scheduled by the PSCCH may indicate the first resource corresponding to the index of the first reference signal associated with the PSSCH. For example, the SCI 2 in the PSSCH scheduled by the PSCCH may indicate the first resource corresponding to the index of the first reference signal associated with the PSSCH. For another example, a media access control (media access control, MAC) layer control element (control element, CE) in the PSSCH scheduled by the PSCCH may indicate the first resource corresponding to the index of the first reference signal associated with the PSSCH.

Manner 4: A PSBCH included in each first reference signal indicates the first resource corresponding to an index of the first reference signal in which the PSBCH is located.

Each first reference signal may be an S-SSB, and the PSBCH included in the S-SSB may indicate a first resource corresponding to an index of the first reference signal in which the PSBCH is located.

In the foregoing four manners, the first terminal device and the second terminal device may learn of each first resource corresponding to an index of each first reference signal.

It should be noted that a first resource corresponding to an index of each first reference signal and the index of the first reference signal may be included in different channels or included in a same channel. For example, a PSCCH associated with each first reference signal may include an index of the first reference signal associated with the PSSCH, or may include the first resource corresponding to the index of the first reference signal associated with the PSSCH. Alternatively, the PSCCH associated with each first reference signal may include an index of each first reference signal, and the PSSCH associated with each first reference signal may include the first resource corresponding to the index of the first reference signal associated with the PSSCH.

Optionally, each first resource may be understood as a resource for reporting a first sequence by the second terminal device.

S420: The second terminal device determines a target reference signal from the at least one first reference signal.

Optionally, the second terminal device determines the target reference signal from the at least one first reference signal based on received power of receiving the at least one first reference signal.

Optionally, the second terminal device determines, from the at least one first reference signal, a first reference signal with highest RSRP as the target reference signal.

Optionally, the second terminal device determines, from the at least one first reference signal, a first reference signal whose RSRP is greater than a first RSRP threshold as the target reference signal. Optionally, the first RSRP threshold may be configured by the network device or pre-configured. Optionally, a pre-configuration may be a setting before delivery.

Optionally, the second terminal device determines, from the at least one first reference signal, a first reference signal with a highest signal to interference plus noise ratio (signal to interference plus noise ratio, SINR) as the target reference signal.

Optionally, the second terminal device determines, from the at least one first reference signal, a first reference signal whose SINR is greater than a first SINR threshold as the target reference signal. Optionally, the first SINR threshold may be configured by the network device or pre-configured. Optionally, a pre-configuration may be a setting before delivery.

Optionally, there may be one or more target reference signals determined by the second terminal device.

Optionally, the index of each of the at least one first reference signal indicates the first reference signal. If the PSCCH associated with each first reference signal may include the index of the first reference signal, the second terminal device determines an index of the target reference signal from a PSCCH associated with the target reference signal; if the PSSCH associated with each first reference signal may include the index of each first reference signal, the second terminal device determines an index of the target reference signal from a PSSCH associated with the target reference signal; or if each first reference signal includes the frame sequence number for sending each first reference signal and the slot sequence number for sending each first reference signal, the second terminal device may determine an index of the target reference signal based on a frame sequence number for sending the target reference signal by the first terminal device and a slot sequence number for sending the target reference signal by the first terminal device.

S430: The second terminal device sends the first sequence to the first terminal device on a first target resource corresponding to the target reference signal, and the first terminal device detects the first sequence on at least one first resource, where the first sequence has a binding relationship with the first terminal device.

The resource on which the first sequence is received is the first target resource, a beam for sending the first reference signal corresponding to the first target resource is the first target beam, and the at least one first beam includes the first target beam.

It may be understood that, because the at least one first resource corresponds to the at least one first reference signal, after the second terminal device determines the target reference signal from the at least one first reference signal, the second terminal device determines, based on the correspondence between the at least one first resource and the at least one first reference signal, the first resource corresponding to the target reference signal as the first target resource, and sends the first sequence on the first target resource. If the first terminal device receives the first sequence on the first target resource, the first terminal device determines, based on the correspondence between the at least one first resource and the at least one first reference signal, the first reference signal corresponding to the first target resource as the target reference signal, and a beam for sending the target reference signal is the first target beam.

Optionally, that the first sequence has a binding relationship with the first terminal device may be replaced with that the first sequence corresponds to the first terminal device.

Optionally, that the first sequence has a binding relationship with the first terminal device may be replaced with that the first sequence is associated with the first terminal device.

Optionally, that the first sequence has a binding relationship with the first terminal device may be replaced with that the first sequence has no binding relationship with the second terminal device, and different devices send a same first sequence on the first target resource.

Optionally, a sequence that has a binding relationship with the first terminal device may be one or more sequences, and the first sequence is one of the one or more sequences.

Optionally, the method further includes: detecting a second sequence on the at least one first resource, where a resource for receiving the second sequence is also the first target resource, and the second sequence has a binding relationship with the first terminal device.

Optionally, the first sequence comes from the second terminal device, and the second sequence comes from a third terminal device. The first terminal device does not distinguish between a sending device for the first sequence and a sending device for the second sequence, and the first terminal device does not need to determine a terminal device from which the first sequence and the second sequence separately come. In this way, after the first terminal device receives the first sequence and the second sequence, the first terminal device does not discard any sequence, and the second terminal device and the third terminal device do not need to contend for reporting. Therefore, a reporting delay can be reduced.

Optionally, the first sequence is the same as the second sequence. In this way, the second terminal device and the third terminal device may send a same sequence on a same first target resource. In this way, a gain of receiving the first sequence by the first terminal device can also be improved.

Optionally, the first sequence is different from the second sequence, and the first terminal device may be bound to two different sequences. In this way, the first terminal device may detect both the first sequence and the second sequence on the at least one first resource. If the first sequence and/or the second sequence are/is received on a first resource, the first resource is the first target resource. Alternatively, if the first sequence and the second sequence are respectively received on two first resources, the two first resources are first target resources. If the two first resources correspond to one first reference signal, a beam for sending the first reference signal corresponding to the two first resources is the first target beam. Alternatively, if the first sequence and the second sequence are respectively received on two first resources, the two first resources are first target resources. If each of the two first resources corresponds to one first reference signal, and there are two first reference signals in total, a beam for sending the two first reference signals corresponding to the two first resources is the first target beam. If a beam for sending the two first reference signals corresponding to the two first resources is one beam, the first target beam is the beam, if the two first reference signals corresponding to the two first resources are two beams, the first target beam is the two beams.

Optionally, before S430, the method 400 further includes: After the second terminal device determines the target reference signal, the second terminal device determines the first target resource corresponding to the target reference signal. Optionally, that the second terminal device determines the first target resource corresponding to the target reference signal includes: The second terminal device determines a first target resource corresponding to the index of the target reference signal. The second terminal device determines, based on the correspondence between the at least one first reference signal and the at least one first resource, the first target resource corresponding to the index of the target reference signal. For example, if the index of the at least one first reference signal one-to-one corresponds to the at least one first resource, the second terminal device may determine a first resource corresponding to the index of the target reference signal as the first target resource. For another example, if the index of one first reference signal corresponds to a plurality of first resources, the second terminal device may determine that some or all of the plurality of first resources corresponding to the index of the target reference signal are the first target resources. For example, a reference signal 1 corresponds to a resource 1 and a resource 2. If the reference signal 1 is a target reference signal, the second terminal device may determine that the resource 1 is the first target resource, determine that the resource 2 is the first target resource, or determine that the resource 1 and the resource 2 are the first target resources.

Optionally, before S430, the method 400 may further include: The second terminal device determines the first sequence, and the first terminal device determines the first sequence. The following describes a case in which the first terminal device and the second terminal device may determine the first sequence in any one of the following manners.

Manner 1: The second terminal device determines the first sequence based on an identifier of the first terminal device. The first terminal device determines the first sequence based on the identifier of the first terminal device.

That the first sequence has a binding relationship with the first terminal device may be: The first sequence is determined based on the identifier of the first terminal device. In this way, the first terminal device and the second terminal device may determine the first sequence based on the identifier of the first terminal device, the second terminal device may send the first sequence on the first target resource, and the first terminal device may receive the first sequence on the first target resource.

Optionally, that the second terminal device determines the first sequence based on the identifier of the first terminal device includes: The second terminal device determines the first sequence in a sequence set through a modulo operation performed on N based on the identifier of the first terminal device. That the first terminal device determines the first sequence based on the identifier of the first terminal device includes: The first terminal device determines the first sequence in a sequence set through a modulo operation performed on N based on the identifier of the first terminal device. In other words, the first sequence is determined in the sequence set through the modulo operation performed on N based on the identifier of the first terminal device, where N is a quantity of sequences included in the sequence set, the sequence set includes one or more sequences, and the one or more sequences include the first sequence.

Optionally, the sequence set is predefined. Optionally, a pre-configuration may be a setting before delivery.

Optionally, the sequence set is configured by the network device. For example, the network device may configure a sequence set for either of the first terminal device and the second terminal device.

Optionally, each of the at least one first reference signal includes an identifier of the first terminal device.

Optionally, each of the at least one first reference signal includes an identifier of a primary synchronization sequence and an identifier of a secondary synchronization sequence, the identifier of the primary synchronization sequence and the identifier of the secondary synchronization sequence indicate an identifier of a sidelink synchronization signal (sidelink synchronization signal, SLSS), the identifier of the SLSS may be used as an identifier of the first terminal device, and identifiers of SLSSs indicated by all the first reference signals are the same. Optionally, the at least one first reference signal may be an S-SSB. Optionally, the primary synchronization sequence is a sequence corresponding to an S-PSS in the S-SSB, and the secondary synchronization sequence is a sequence corresponding to an S-SSS in the S-SSB. In this way, the second terminal device may determine the identifier of the SLSS based on the identifier of the primary synchronization sequence and the identifier of the secondary synchronization sequence that are included in each first reference signal, and use the identifier of the SLSS as the identifier of the first terminal device. Optionally, a protocol may specify that the identifier of the SLSS is the identifier of the first terminal device. Optionally, the network device may indicate, to the first terminal device and the second terminal device, that the identifier of the SLSS is the identifier of the first terminal device.

Optionally, a PSBCH in each of the at least one first reference signal may include the identifier of the first terminal device. Optionally, the at least one first reference signal may be an S-SSB. Optionally, the protocol may specify that the PSBCH in each of the at least one first reference signal includes an identifier of the first terminal device. Optionally, the network device may indicate, to the first terminal device and the second terminal device, that the PSBCH in each of the at least one first reference signal includes the identifier of the first terminal device.

Optionally, SCI associated with the at least one first reference signal includes the identifier of the first terminal device. Optionally, the SCI may be carried on a PSSCH or a PSCCH. In other words, the PSSCH may include the identifier of the first terminal device, or the PSCCH may include the identifier of the first terminal device. Optionally, SCI 1 in the PSCCH includes the identifier of the first terminal device. Optionally, SCI 2 in the PSSCH includes the identifier of the first terminal device.

Manner 2: The second terminal device determines a secondary synchronization sequence included in each of the at least one first reference signal as the first sequence. The first terminal device may also determine the secondary synchronization sequence included in each of the at least one first reference signal as the first sequence. Secondary synchronization sequences in all the first reference signals are the same.

That the first sequence has a binding relationship with the first terminal device may be: The first sequence is the secondary synchronization sequence in each first reference signal sent by the first terminal device. In this way, the first terminal device and the second terminal device may determine the first sequence based on the secondary synchronization sequence in each first reference signal, the second terminal device may send the first sequence on the first target resource, and the first terminal device may receive the first sequence on the first target resource.

Optionally, the secondary synchronization sequence may be a sequence corresponding to an S-SSS included in an S-SSB.

It may be understood that the protocol may specify whether the first terminal device and the second terminal device determine the first sequence in the foregoing manner 1 or manner 2. Alternatively, the network device may configure the first terminal device and the second terminal device to determine the first sequence in the foregoing manner 1 or manner 2. A manner of determining the first sequence by the first terminal device is the same as a manner of determining the first sequence by the second terminal device.

Optionally, that the second terminal device sends the first sequence to the first terminal device on a first target resource corresponding to the target reference signal includes: The second terminal device sends, by using a predefined beam, the first sequence to the first terminal device on the first target resource corresponding to the target reference signal. When the second terminal device sends the first sequence by using the predefined beam, the predefined beam may occupy one time resource. This can avoid a case in which the second terminal device needs to occupy a plurality of time resources to report a beam measurement result and can reduce a delay.

Optionally, the predefined beam may also be referred to as an omnidirectional beam or a pseudo omnidirectional beam.

Optionally, the predefined beam may alternatively be a beam previously configured by the first terminal device for the second terminal device.

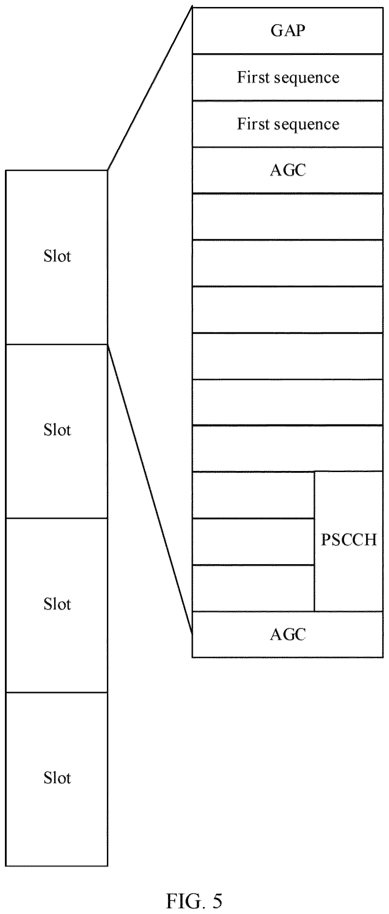

Optionally, the second terminal device may send the first sequence on one or more symbols (the one or more symbols may be one reported time resource) in one slot. The second terminal device sends the first sequence on a plurality of symbols, so that coverage can be improved, and the first terminal device can better receive the first sequence. For example, in an indoor commercial scenario, compared with a capability of the first terminal device, a capability of the second terminal device may be relatively weak, and the second terminal device may send the first sequence by using the plurality of symbols. Therefore, a gain of receiving the first sequence by the first terminal device can be improved. As shown in FIG. 5, a first target resource occupies three symbols in one slot. The first symbol is used for automatic gain control (automatic gain control, AGC), and the last two symbols are used to send the first sequence. In other words, the first target resource in FIG. 5 is the eleventh symbol, the twelfth symbol, and the thirteenth symbol.

Optionally, that the first terminal device detects the first sequence on at least one first resource includes: The first terminal device detects the first sequence on each of the at least one first resource by using a first beam for sending a first reference signal corresponding to each first resource.

Optionally, that the first terminal device detects the second sequence on at least one first resource includes: The first terminal device detects the second sequence on each of the at least one first resource by using a first beam for sending a first reference signal corresponding to each first resource.

Optionally, if the first sequence is the same as the second sequence, a manner of determining the second sequence by either of the first terminal device and the second terminal device is the foregoing manner of determining the first sequence. This is not limited in embodiments of this application.

Optionally, if the first sequence is different from the second sequence, different sequences correspond to different sequence sets, a sequence set corresponding to the first sequence is a first sequence set, and a sequence set corresponding to the second sequence is a second sequence set. There is no intersection between sequences included in the first sequence set and sequences included in the second sequence set.

Optionally, the first terminal device determines the first sequence based on an identifier of the first terminal device and the first sequence set. The second terminal device determines the first sequence based on the identifier of the first terminal device and the first sequence set. Optionally, that the first terminal device determines the first sequence based on an identifier of the first terminal device and the first sequence set includes: The first terminal device determines, in the first sequence set, the first sequence through a modulo operation performed on K1 based on the identifier of the first terminal device where K1 is a quantity of sequences included in the first sequence set, and K1 is a positive integer. Optionally, that the second terminal device determines the first sequence based on the identifier of the first terminal device and the first sequence set includes: The second terminal device determines, in the first sequence set, the first sequence through a modulo operation performed on K1 based on the identifier of the first terminal device. A description of the identifier of the first terminal device is similar to the description in the foregoing manner 1. To avoid repetition, details are not described again.

Optionally, the first terminal device determines the second sequence based on the identifier of the first terminal device and the second sequence set. The second terminal device determines the second sequence based on the identifier of the first terminal device and the second sequence set.

Optionally, the first terminal device determines the second sequence based on the identifier of the first terminal device and the second sequence set. The second terminal device determines the second sequence based on the identifier of the first terminal device and the second sequence set. Optionally, that the first terminal device determines the second sequence based on the identifier of the first terminal device and the second sequence set includes: The first terminal device determines, in the second sequence set, the second sequence through a modulo operation performed on K2 based on the identifier of the first terminal device, where K2 is a quantity of sequences included in the second sequence set, and K2 is a positive integer. Optionally, that the second terminal device determines the second sequence based on the identifier of the first terminal device and the second sequence set includes: The second terminal device determines, in the second sequence set, the second sequence through a modulo operation performed on K2 based on the identifier of the first terminal device. A description of the identifier of the first terminal device is similar to the description in the foregoing manner 1. To avoid repetition, details are not described again.

For better understanding, a relationship between the at least one first beam, the at least one first reference signal, and the at least one first resource is discussed in the following four cases.

Case 1: The at least one first beam one-to-one corresponds to the at least one first reference signal, that is, different first reference signals are sent by different beams of the first terminal device; and the at least one first reference signal one-to-one corresponds to the at least one first resource, that is, the at least one first beam one-to-one corresponds to the at least one first resource. In other words, one first beam corresponds to one first resource. If the first terminal device receives the first sequence on a first resource corresponding to a first beam, the first terminal device determines that the first beam corresponding to the first resource is the first target beam.

For example, P first beams one-to-one correspond to P first reference signals, the P first reference signals one-to-one correspond to P first resources, the first terminal device separately sends the P first reference signals by using the P first beams, the P first reference signals correspond to the P first resources used to report the first sequence, and P is a positive integer. For example, a beam 1 corresponds to a reference signal 1, the reference signal 1 corresponds to a resource 1, and the first terminal device sends the reference signal 1 by using the beam 1. If the second terminal device determines that RSRP or an SINR of the reference signal 1 is high, the second terminal device may send the first sequence on the resource 1, the first terminal device receives the first sequence on the resource 1 by using the beam 1, and the first terminal device determines that the beam 1 for sending the reference signal 1 corresponding to the resource 1 is the first target beam.

Case 2: One first beam corresponds to a plurality of first reference signals, and the first terminal device sends the plurality of first reference signals by using one first beam. The plurality of first reference signals correspond to one first resource, that is, one beam corresponds to one first resource, and quantities of first reference signals corresponding to different first resources may be the same or may be different. In other words, the first terminal device may send a plurality of first reference signals by using one beam. If the first terminal device receives the first sequence on the one first resource corresponding to the plurality of first reference signals, the first terminal device may determine that the first beam corresponding to the one first resource is the first target beam.

For example, Q first beams correspond to L first reference signals, the L first reference signals correspond to Q first resources, and Q and L are positive integers. For example, a beam 1 corresponds to a reference signal 1 and a reference signal 2, the reference signal 1 and the reference signal 2 correspond to a resource 1, and the first terminal device separately sends the reference signal 1 and the reference signal 2 by using the beam 1. If the second terminal device determines that RSRP of the reference signal 1 or the reference signal 2 is high, or determines that an SINR of the reference signal 1 or the reference signal 2 is high, the second terminal device may send the first sequence on the resource 1, and the first terminal device receives the first sequence on the resource 1 by using the beam 1. The first terminal device determines that the beam 1 for sending the reference signal 1 and the reference signal 2 that correspond to the resource 1 is the first target beam.

Case 3: One first beam corresponds to one first reference signal, different first reference signals are sent by using different first beams, and one first reference signal corresponds to a plurality of first resources. In other words, one first beam corresponds to a plurality of first resources, and quantities of first resources corresponding to different first reference signals may be the same or may be different. In other words, the first terminal device may send one first reference signal by using one beam. If the first terminal device receives the first sequence on any one of the plurality of first resources corresponding to the first reference signal, the first terminal device may determine that the first beam corresponding to the any one first resource is the first target beam, and the any one first resource is the first target resource.

For example, W first beams one-to-one correspond to W first reference signals, the W first reference signals correspond to R first resources, W and R are positive integers, and R is greater than W. For example, a beam 1 corresponds to a reference signal 1, the reference signal 1 corresponds to either of a resource 1 and a resource 2, and the first terminal device sends the reference signal 1 by using the beam 1. If the second terminal device determines that RSRP or an SINR of the reference signal 1 is high, the second terminal device may send the first sequence on the resource 1 or the resource 2, the first terminal device receives the first sequence on the resource 1 or the resource 2 by using the beam 1, and the first terminal device determines that the beam 1 for sending the reference signal 1 corresponding to the resource 1 or the resource 2 is the first target beam.

Case 4: One first beam corresponds to a plurality of first reference signals, the plurality of first reference signals one-to-one correspond to a plurality of first resources, and quantities of first reference signals corresponding to different first beams may be the same or different. In other words, the first terminal device may send a plurality of first reference signals by using one beam. If the first terminal device receives the first sequence on any one of the plurality of first resources corresponding to the plurality of first reference signals, the first terminal device may determine that the first beam corresponding to the any first resource is the first target beam.

For example, K first beams correspond to J first reference signals, the J first reference signals correspond to J first resources, K and J are positive integers, and J is greater than K. For example, a beam 1 corresponds to a reference signal 1 and a reference signal 2, a reference signal 1 corresponds to a resource 1, and a reference signal 2 corresponds to a resource 2. The first terminal device sends the reference signal 1 by using the beam 1, and sends the reference signal 2 by using the beam 1. If the second terminal device determines that RSRP or an SINR of the reference signal 1 is high, the second terminal device may send the first sequence on the resource 1, and the first terminal device receives the first sequence on the resource 1 by using the beam 1. The first terminal device determines that the beam 1 for sending the reference signal 1 corresponding to the resource 1 is the first target beam.

Optionally, the correspondence between the at least one first beam and the at least one first reference signal, and the correspondence between the at least one first reference signal and the at least one first resource may be a combination of any two or more of the foregoing four cases. To avoid repetition, a combination is not described in detail.

It may be understood that, in the foregoing four cases, one beam corresponds to one first resource, or one beam corresponds to a plurality of first resources. Therefore, if the first terminal device receives the first sequence on any first resource, it indicates that a beam for sending the first reference signal corresponding to the first resource is the first target beam. In other words, in the foregoing four cases, the first target beam may be determined based on a first resource for receiving the first sequence.

Optionally, after S430, the method 400 further includes:

S440: The first terminal device sends the sidelink control information by using the first target beam, where the first target beam is a transmission beam for a first reference signal corresponding to the first target resource; and the second terminal device receives the sidelink control information, where the sidelink control information includes the index of the target reference signal, and an identifier of a source address of the sidelink control information is the identifier of the first terminal device.

Optionally, that the second terminal device receives the sidelink control information includes: The second terminal device receives the sidelink control information by using the predefined beam.

Optionally, the predefined beam may be the omnidirectional beam or the pseudo omnidirectional beam.

Optionally, the first terminal device may determine, based on the correspondence between the at least one first reference signal and the at least one first resource, a target reference signal corresponding to the first target resource, and the sent sidelink control information includes the index of the target reference signal.

Optionally, a resource for sending the sidelink control information by the first terminal device may be sensed by the first terminal device.

Optionally, the identifier of the destination address of the sidelink control information is the preset value. After the second terminal device receives the sidelink control information, the second terminal device determines, based on a case in which the destination address of the sidelink control information is the preset value and based on the index of the target reference signal, that the target reference signal is the target reference signal determined in S420. In this case, the second terminal device needs to perform beam training, and the second terminal device may perform S450.

Optionally, the identifier of the destination address of the sidelink control information is an identifier of the first terminal device. After the second terminal device receives the sidelink control information, the second terminal device determines, based on a case in which the identifier of the destination address in the sidelink control information is the identifier of the first terminal device, and the second terminal device determines, and based on the index of the target reference signal in the sidelink control information, that the target reference signal is the target reference signal determined in S420. In this case, the second terminal device needs to perform beam training, and the second terminal device may perform S450.

Optionally, the index of the target reference signal is included in SCI 1 in the PSCCH.

Optionally, the sidelink control information may be further associated with a resource used by the first terminal device to send the at least one second reference signal. The resource that is associated with the sidelink control information and that is used by the first terminal device to send the at least one second reference signal may be a resource associated with the sidelink control information in the PSSCH, or may be a resource associated with the sidelink control information in the PSCCH. In this way, after S440, the method may further include S450.

Optionally, a process performed by the third terminal device is the same as a process performed by the second terminal device. If the third terminal device also receives the at least one first reference signal, and determines the target reference signal, the third terminal device also sends the second sequence on the first target resource, and the second sequence and the first sequence are a same sequence. In other words, after the first terminal device receives the first sequence sent by the second terminal device and the third terminal device, the first terminal device does not need to determine whether the first sequence comes from the second terminal device or the third terminal device. In S440, the third terminal device receives the sidelink control information, and determines, based on the index of the target reference signal included in the sidelink control information, that the target reference signal is a target reference signal determined by the third terminal device. In addition, because the destination address identifier of the sidelink control information is the preset value or the destination address identifier of the sidelink control information is the identifier of the first terminal device, the third terminal device may determine that beam training needs to be performed. For example, the second terminal device and the third terminal device train beams of the second terminal device and the third terminal device in parallel, in this case, the third terminal device may also receive the at least one second reference signal on the resource associated with the sidelink control information, to obtain a third target beam of the third terminal device through training. In other words, the sidelink control information sent by the first terminal device may enable the second terminal device and the third terminal device to perform beam training in parallel. In this way, a delay can be reduced, and a problem that time occupied when the second terminal device and the third terminal device need to sequentially perform beam training is long is resolved. For example, the first terminal device is the terminal device 121 shown in FIG. 1, the second terminal device is the terminal device 122 shown in FIG. 1, and the terminal device is 123 shown in FIG. 1. In this way, the terminal device 122 and the terminal device 123 may train beams of the terminal device 122 and the terminal device 123 in parallel.

S450: The first terminal device sends the at least one second reference signal on the resource associated with the sidelink control information, and the second terminal device receives the at least one second reference signal on the resource associated with the sidelink control information by using at least one second beam.

Optionally, the at least one second beam one-to-one corresponds to the at least one second reference signal, that is, one second beam may receive one second reference signal, and different second reference signals are received by using different second beams.

Optionally, one second beam may correspond to a plurality of second reference signals, that is, one second beam may receive a plurality of second reference signals. A plurality of different second reference signals correspond to different second beams. For example, a beam 1 corresponds to a reference signal set 1, the reference signal set 1 includes a plurality of second reference signals, a beam 2 corresponds to a reference signal set 2, the reference signal set 2 includes a plurality of second reference signals, and the plurality of second reference signals included in the reference signal set 1 and the plurality of second reference signals included in the reference signal set 2 have no intersection, or an intersection is empty.

Optionally, a pattern (pattern) of the at least one second reference signal may be a pre-configured pattern corresponding to a first resource pool. Optionally, the pre-configuration may be a setting before delivery. Optionally, that the first terminal device sends the at least one second reference signal on the resource associated with the sidelink control information includes: The first terminal device sends, on the resource associated with the sidelink control information, the at least one second reference signal based on a pre-configured pattern of the at least one second reference signal. That the second terminal device receives the at least one second reference signal on the resource associated with the sidelink control information by using at least one second beam includes: The second terminal device receives, on the resource associated with the sidelink control information by using the at least one second beam, the at least one second reference signal based on a pre-configured pattern of the at least one second reference signal.

Optionally, a pattern (pattern) of the at least one second reference signal may be a pattern that is configured by the network device and that corresponds to a first resource pool. Optionally, that the first terminal device sends the at least one second reference signal on the resource associated with the sidelink control information includes: The first terminal device sends, on the resource associated with the sidelink control information, the at least one second reference signal based on a pattern that is configured by the network device and that is of the at least one second reference signal. That the second terminal device receives the at least one second reference signal on the resource associated with the sidelink control information by using at least one second beam includes: The second terminal device receives, on the resource associated with the sidelink control information by using the at least one second beam, the at least one second reference signal based on a pattern that is configured by the network device and that is of the at least one second reference signal.

Optionally, the first resource pool includes the resource associated with the sidelink control information.

Optionally, the at least one second reference signal may be the CSI-RS.

S460: The second terminal device determines a second target beam from the at least one second beam based on RSRP or an SINR of the at least one second reference signal.

Optionally, the second terminal device determines, as the second target beam based on a received second reference signal whose RSRP is the highest or whose RSRP is greater than a second RSRP threshold in the at least one second reference signal, a second beam corresponding to the received second reference signal whose RSRP is the highest or whose RSRP is greater than the second RSRP threshold.

Optionally, if the at least one second beam one-to-one corresponds to the at least one second reference signal, the second terminal device determines a second beam corresponding to a second reference signal whose RSRP is highest or whose RSRP is greater than a second RSRP threshold as the second target beam; or if one second beam may correspond to a plurality of second reference signals, the second terminal device determines a second beam corresponding to a second reference signal whose RSRP is highest or whose RSRP is greater than a second RSRP threshold as the second target beam.

Optionally, the second terminal device determines, as the second target beam based on a received second reference signal whose SINR is the highest or whose SINR is greater than a second SINR threshold in the at least one second reference signal, a second beam corresponding to the received second reference signal whose SINR is the highest or whose SINR is greater than the second SINR threshold.

Optionally, if the at least one second beam one-to-one corresponds to the at least one second reference signal, the second terminal device determines a second beam corresponding to a second reference signal whose SINR is the highest or whose SINR is greater than a second SINR threshold as the second target beam; or if one second beam may correspond to a plurality of second reference signals, the second terminal device determines a second beam corresponding to a second reference signal whose SINR is the highest or whose SINR is greater than the second SINR threshold as the second target beam.

Optionally, the second target beam is a reception beam of the second terminal device.

In the method 400, when the first terminal device receives, on any at least one first resource, the first sequence bound to the first terminal device, the first terminal device may determine the first target beam based on the correspondence between the first resource and the first reference signal and the correspondence between the first reference signal and the first beam. In addition, the sidelink control information sent by the first terminal device by using the first target beam may include the index of the target reference signal. In this way, if the index of the reference signal included in the sidelink control information is the index of the target reference signal determined by the second terminal device in S420, and the identifier of the destination address of the sidelink control information is the preset value or the identifier of the first terminal device, the second terminal device needs to switch a beam from the predefined beam to the at least one second beam, to train the beam of the second terminal device, and the second terminal device determines the second target beam from the at least one second beam. In this way, the first target beam of the first terminal device can be obtained through training, and the second target beam of the second terminal device can also be obtained through training. In addition, even if different second terminal devices and third terminal devices separately send the first sequence on the first target resource, the first terminal device receives the first sequence on the first target resource, so that the first terminal device can determine that the first reference signal corresponding to the first target resource is the target reference signal, and a beam for sending the target reference signal is the first target beam. The second terminal device or the third terminal device does not need to contend for reporting the first sequence. This can reduce a delay.

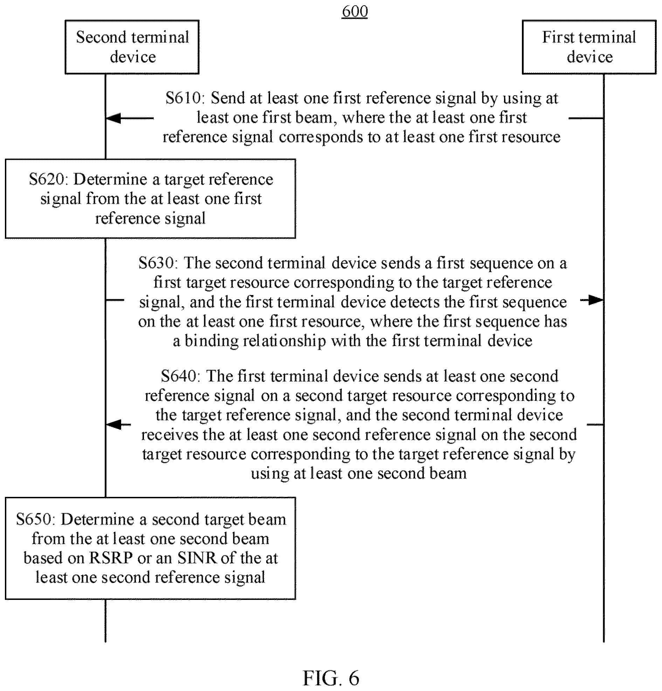

In the method 400, a resource used by the first terminal device to send the at least one second reference signal is a resource associated with sidelink control information. In some embodiments, the resource used by the first terminal device to send the at least one second reference signal may also be a resource associated with the at least one first reference signal. The following describes the method 600 with reference to FIG. 6. As shown in FIG. 6, the method 600 includes the following steps.

S610 is the same as S410.

At least one first reference signal not only corresponds to at least one first resource, but also may correspond to at least one second resource. The correspondence between the at least one first reference signal and the at least one first resource is the same as that described in S410. The following describes the correspondence between the at least one first reference signal and the at least one second resource.

Optionally, one first reference signal may correspond to one or more second resources.

Optionally, the at least one second resource corresponding to the at least one first reference signal is a resource used by a first terminal device to send a second reference signal.

Optionally, a PSSCH associated with each of the at least one first reference signal indicates a second resource corresponding to an index of the first reference signal associated with the PSSCH. Optionally, SCI 2 included in the PSSCH associated with each first reference signal may indicate a second resource corresponding to an index of the first reference signal associated with the PSSCH. Optionally, a MAC CE included in the PSSCH associated with each first reference signal may indicate a second resource corresponding to an index of the first reference signal associated with the PSSCH.

Optionally, a PSCCH associated with each of the at least one first reference signal of at least one reference signal indicates a second resource corresponding to an index of the first reference signal associated with the PSCCH. Optionally, SCI 1 in the PSCCH associated with each first reference signal may indicate that the first reference signal associated with the PSCCH corresponds to a second resource.

Optionally, a PSBCH included in each first reference signal indicates a second resource corresponding to an index of the first reference signal associated with the PSBCH.

It should be noted that a first resource corresponding to an index of each first reference signal and a second resource corresponding to an index of each first reference signal may be indicated or included in different channels. For example, the PSSCH associated with each first reference signal indicates a first resource corresponding to an index of the first reference signal associated with the PSSCH, and the PSCCH associated with each first reference signal indicates the second resource corresponding to the index of the first reference signal associated with the PSCCH. In other words, there is no binding relationship between the first resource corresponding to the index of each first reference signal and the second resource corresponding to each first reference signal.

S620 and S630 are respectively the same as S420 and S430.

S640: The first terminal device sends at least one second reference signal on a second target resource corresponding to a target reference signal, and the second terminal device receives the at least one second reference signal on the second target resource corresponding to the target reference signal by using at least one second beam.

Optionally, one second beam corresponds to one second reference signal, and the at least one second beam one-to-one corresponds to the at least one second reference signal. In other words, one second beam may receive one second reference signal, and the second terminal device may receive different second reference signals by using different second beams.

Optionally, one second beam corresponds to a plurality of second reference signals, that is, one second beam may receive a plurality of second reference signals. A plurality of different second reference signals correspond to different second beams. For example, a beam 1 corresponds to a reference signal set 1, the reference signal set 1 includes a plurality of second reference signals, a beam 2 corresponds to a reference signal set 2, the reference signal set 2 includes a plurality of second reference signals, and the plurality of second reference signals included in the reference signal set 1 and the plurality of second reference signals included in the reference signal set 2 have no intersection, or an intersection is empty.

Optionally, if the target reference signal corresponds to one second resource, the second resource corresponding to the target reference signal is a second target resource, and the first terminal device sends the at least one second reference signal on the second resource.

Optionally, if the target reference signal corresponds to a plurality of second resources, the plurality of second resources corresponding to the target reference signal are second target resources, and the first terminal device sends the at least one second reference signal on some or all of the plurality of second resources.

Optionally, a pattern (pattern) of the at least one second reference signal may be a pre-configured pattern corresponding to a first resource pool. Optionally, that the first terminal device sends at least one second reference signal on a second target resource corresponding to a target reference signal includes: The first terminal device sends, on the second target resource corresponding to the target reference signal, the at least one second reference signal based on a pre-configured pattern of the at least one second reference signal. That the second terminal device receives the at least one second reference signal on the second target resource corresponding to the target reference signal by using at least one second beam includes: The second terminal device receives, on the second target resource corresponding to the target reference signal by using the at least one second beam, the at least one second reference signal based on a pre-configured pattern of the at least one second reference signal.

Optionally, a pattern (pattern) of the at least one second reference signal may be a pattern that is configured by the network device and that corresponds to a first resource pool. Optionally, that the first terminal device sends at least one second reference signal on a second target resource corresponding to a target reference signal includes: The first terminal device sends, on the second target resource corresponding to the target reference signal, the at least one second reference signal based on a pattern of the at least one second reference signal configured by the network device. That the second terminal device receives the at least one second reference signal on the second target resource corresponding to the target reference signal by using at least one second beam includes: The second terminal device receives, on the second target resource corresponding to the target reference signal by using the at least one second beam, the at least one second reference signal based on a pattern of the at least one second reference signal configured by the network device.

Optionally, the first resource pool includes each second resource associated with each of the at least one first reference signal.

Optionally, the at least one second reference signal may be a CSI-RS.

Optionally, the at least one second reference signal may alternatively be a DMRS.

S650 is the same as S460.

In the method 600, a resource associated with the at least one first reference signal may be at least one first resource used to report the first sequence, or may be at least one second resource used by the first terminal device to send the second reference signal. If the first terminal device receives a first sequence on a first target resource, the first terminal device may determine, as a first target beam, a beam for sending a target reference signal corresponding to the first target resource. In addition, the first terminal device determines the target reference signal based on the first target resource, and sends the at least one second reference signal on the second target resource corresponding to the target reference signal. The at least one second resource includes the second target resource. The second terminal device receives the at least one second reference signal by using the at least one second beam, and determines a second target beam of the second terminal device based on received RSRP or an SINR of the at least one second reference signal.

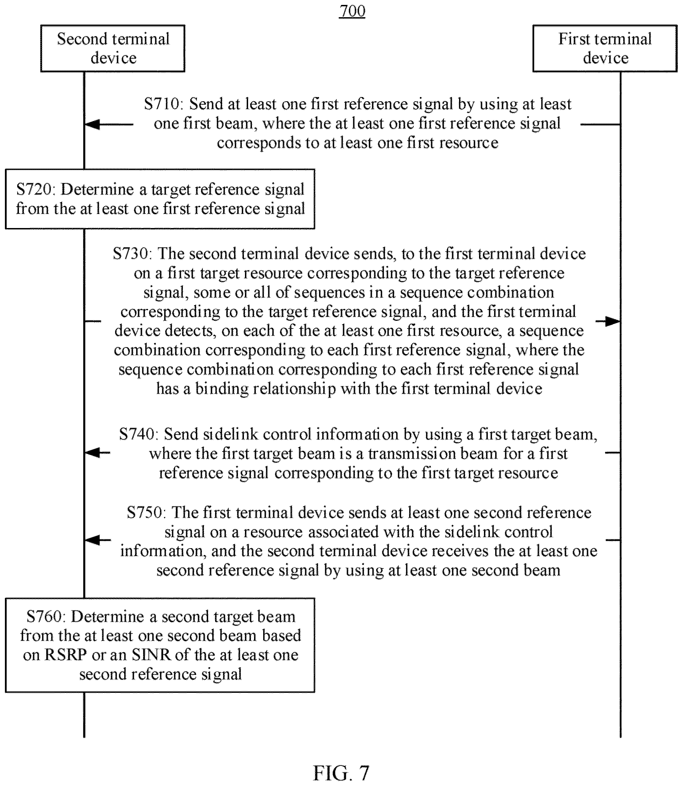

The method 400 and the method 600 describe a case in which one first beam corresponds to one first resource, or one first beam corresponds to a plurality of first resources. The first terminal device may determine the first target beam based on the first target resource on which the first sequence is received. When one first resource corresponds to a plurality of first beams, if the first terminal device receives a first sequence on a first resource, the first terminal device cannot distinguish which first beam in the plurality of first beams corresponding to the first resource is the first target beam. Therefore, a plurality of sequences may be bound to the first terminal device on one first resource. The plurality of sequences are used to distinguish which first beam in the plurality of first beams corresponding to one first resource is the first target beam. The following is described with reference to a method 700 in FIG. 7. As shown in FIG. 7, the method 700 includes the following steps.

S710: A first terminal device sends at least one first reference signal by using at least one first beam, and a second terminal device receives the at least one first reference signal, where the at least one first reference signal corresponds to at least one first resource.

Optionally, different first resources in the at least one first resource correspond to different first reference signals. There is no intersection between first reference signals corresponding to different first resources. Different first reference signals corresponding to one first resource correspond to different sequence combinations. Sequence combinations corresponding to first reference signals on different first resources may be the same or different. A plurality of first reference signals on one first resource may be sent by using different first beams, in other words, one first resource corresponds to a plurality of first beams.

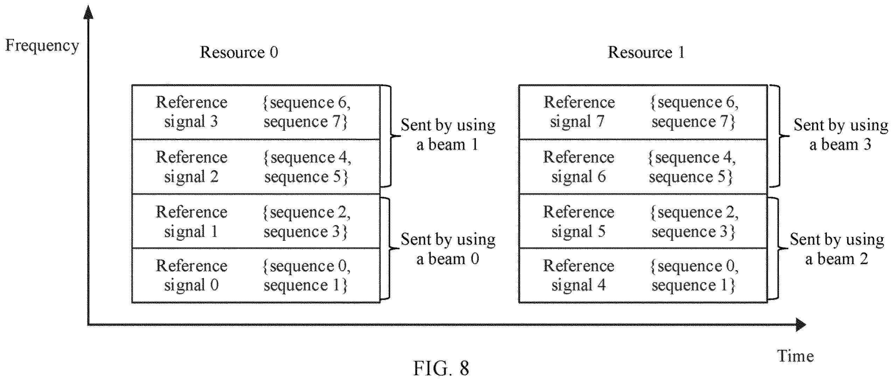

The following provides an example for description. As shown in FIG. 8, a resource 0 is one first resource, and a resource 1 is another first resource. The resource 0 corresponds to four first reference signals: a reference signal 0, a reference signal 1, a reference signal 2, and a reference signal 3. The resource 1 corresponds to four first reference signals: a reference signal 4, a reference signal 5, a reference signal 6, and a reference signal 7. The reference signal 0, the reference signal 1, the reference signal 2, and the reference signal 3 have no intersection with the reference signal 4, the reference signal 5, the reference signal 6, and the reference signal 7. A sequence combination corresponding to the reference signal 0 corresponding to the resource 0 is {sequence 0, sequence 1}, a sequence combination corresponding to the reference signal 1 corresponding to the resource 0 is {sequence 2, sequence 3}, a sequence combination corresponding to the reference signal 2 corresponding to the resource 0 is {sequence 4, sequence 5}, and a sequence combination corresponding to the reference signal 3 corresponding to the resource 0 is {sequence 6, sequence 7}. A sequence combination corresponding to the reference signal 4 corresponding to the resource 1 is {sequence 0, sequence 1}, a sequence combination corresponding to the reference signal 5 corresponding to the resource 1 is {sequence 2, sequence 3}, a sequence combination corresponding to the reference signal 6 corresponding to the resource 1 is {sequence 4, sequence 5}, and a sequence combination corresponding to the reference signal 7 corresponding to the resource 1 is {sequence 6, sequence 7}. FIG. 8 shows that same sequence combinations correspond to first reference signals on different first resources. For example, sequence combinations corresponding to the reference signal 0 corresponding to the resource 0 and the reference signal 4 corresponding to the resource 1 are both {sequence 0, sequence 1}; sequence combinations corresponding to the reference signal 1 corresponding to the resource 0 and the reference signal 5 corresponding to the resource 1 are both {sequence 2, sequence 3}; sequence combinations corresponding to the reference signal 2 corresponding to the resource 0 and the reference signal 6 corresponding to the resource 1 are both {sequence 4, sequence 5}; and sequence combinations corresponding to the reference signal 3 corresponding to the resource 0 and the reference signal 7 corresponding to the resource 1 are both {sequence 6, sequence 7}. The reference signal 0 and the reference signal 1 that correspond to the resource 0 are sent by using a beam 0, and the reference signal 2 and the reference signal 3 that correspond to the resource 0 are sent by using a beam 1. The reference signal 4 and the reference signal 5 that correspond to the resource 1 are sent by using a beam 2, and the reference signal 6 and the reference signal 7 that correspond to the resource 1 are sent by using a beam 3. In this way, the resource 0 corresponds to the beam 0 and the beam 1, and the resource 1 corresponds to the beam 2 and the beam 3.

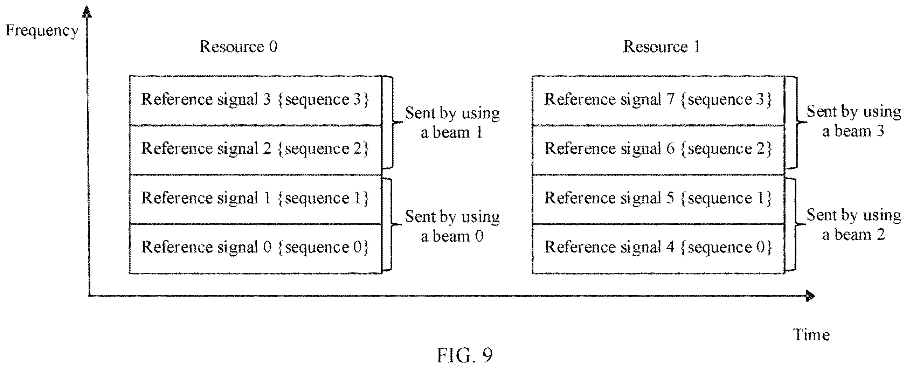

For another example, as shown in FIG. 9, a resource 0 is one first resource, and a resource 1 is another first resource. The resource 0 corresponds to four first reference signals: a reference signal 0, a reference signal 1, a reference signal 2, and a reference signal 3. The resource 1 corresponds to four first reference signals: a reference signal 4, a reference signal 5, a reference signal 6, and a reference signal 7. The reference signal 0, the reference signal 1, the reference signal 2, and the reference signal 3 have no intersection with the reference signal 4, the reference signal 5, the reference signal 6, and the reference signal 7. A sequence combination corresponding to the reference signal 0 corresponding to the resource 0 is {sequence 0}, a sequence combination corresponding to the reference signal 1 corresponding to the resource 0 is {sequence 1}, a sequence combination corresponding to the reference signal 2 corresponding to the resource 0 is {sequence 2}, and a sequence combination corresponding to the reference signal 3 corresponding to the resource 0 is {sequence 3}. A sequence combination corresponding to the reference signal 4 corresponding to the resource 1 is {sequence 0}, a sequence combination corresponding to the reference signal 5 corresponding to the resource 1 is {sequence 1}, a sequence combination corresponding to the reference signal 6 corresponding to the resource 1 is {sequence 2}, and a sequence combination corresponding to the reference signal 7 corresponding to the resource 1 is {sequence 3}. FIG. 9 shows that same sequence combinations correspond to first reference signals on different first resources. For example, sequence combinations corresponding to the reference signal 0 corresponding to the resource 0 and the reference signal 4 corresponding to the resource 1 are both {sequence 0}; sequence combinations corresponding to the reference signal 1 corresponding to the resource 0 and the reference signal 5 corresponding to the resource 1 are both {sequence 1}; sequence combinations corresponding to the reference signal 2 corresponding to the resource 0 and the reference signal 6 corresponding to the resource 1 are both {sequence 2}; and sequence combinations corresponding to the reference signal 3 corresponding to the resource 0 and the reference signal 7 corresponding to the resource 1 are both {sequence 3}. The reference signal 0 and the reference signal 1 that correspond to the resource 0 are sent by using a beam 0, and the reference signal 2 and the reference signal 3 that correspond to the resource 0 are sent by using a beam 1. The reference signal 4 and the reference signal 5 that correspond to the resource 1 are sent by using a beam 2, and the reference signal 6 and the reference signal 7 that correspond to the resource 1 are sent by using a beam 3. In this way, the resource 0 corresponds to the beam 0 and the beam 1, and the resource 1 corresponds to the beam 2 and the beam 3.

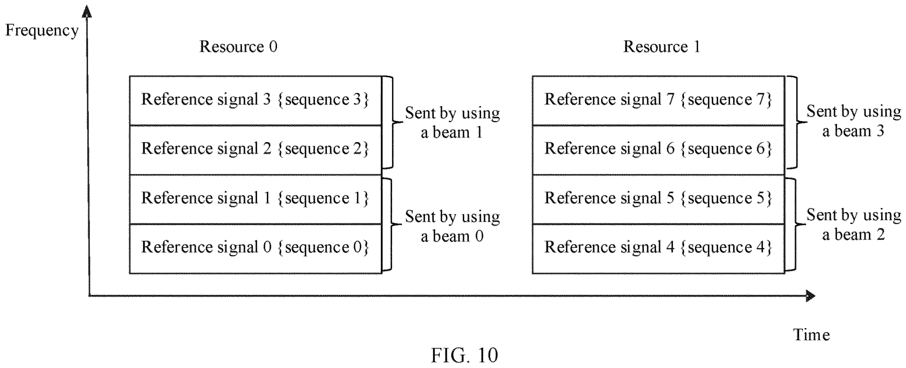

For still another example, as shown in FIG. 10, a resource 0 is one first resource, and a resource 1 is another first resource. The resource 0 corresponds to four first reference signals: a reference signal 0, a reference signal 1, a reference signal 2, and a reference signal 3. The resource 1 corresponds to four first reference signals: a reference signal 4, a reference signal 5, a reference signal 6, and a reference signal 7. The reference signal 0, the reference signal 1, the reference signal 2, and the reference signal 3 have no intersection with the reference signal 4, the reference signal 5, the reference signal 6, and the reference signal 7. A sequence combination corresponding to the reference signal 0 corresponding to the resource 0 is {sequence 0}, a sequence combination corresponding to the reference signal 1 corresponding to the resource 0 is {sequence 1}, a sequence combination corresponding to the reference signal 2 corresponding to the resource 0 is {sequence 2}, and a sequence combination corresponding to the reference signal 3 corresponding to the resource 0 is {sequence 3}. A sequence combination corresponding to the reference signal 4 corresponding to the resource 1 is {sequence 4}, a sequence combination corresponding to the reference signal 5 corresponding to the resource 1 is {sequence 5}, a sequence combination corresponding to the reference signal 6 corresponding to the resource 1 is {sequence 6}, and a sequence combination corresponding to the reference signal 7 corresponding to the resource 1 is {sequence 7}. FIG. 10 shows that first reference signals on different first resources correspond to different sequence combinations. The reference signal 0 and the reference signal 1 that correspond to the resource 0 are sent by using a beam 0, and the reference signal 2 and the reference signal 3 that correspond to the resource 0 are sent by using a beam 1. The reference signal 4 and the reference signal 5 that correspond to the resource 1 are sent by using a beam 2, and the reference signal 6 and the reference signal 7 that correspond to the resource 1 are sent by using a beam 3. In this way, the resource 0 corresponds to the beam 0 and the beam 1, and the resource 1 corresponds to the beam 2 and the beam 3.

Optionally, similar to the manner in S410, correspondences between the at least one first resource, the at least one first reference signal, at least one first beam, and each sequence combination corresponding to the at least one first reference signal may be pre-configured, or configured by the network device, or indicated by a PSCCH, or indicated by a PSSCH, or indicated by a PSBCH, and the correspondences can be learned by the first terminal device and the second terminal device. To avoid repetition, details are not described.

Optionally, an index of each of the at least one first reference signal may indicate each first reference signal.

For the index of each first reference signal, refer to the description in S410. To avoid repetition, details are not described again.

Optionally, the index of each first beam in the at least one first beam may indicate each first beam.

S720 is the same as S420.

S730: The second terminal device sends, to the first terminal device on a first target resource corresponding to a target reference signal, some or all of sequences in a sequence combination corresponding to the target reference signal, and the first terminal device detects, on each of the at least one first resource, a sequence combination corresponding to each first reference signal, where the sequence combination corresponding to each first reference signal has a binding relationship with the first terminal device.

Optionally, if the first terminal device receives a first sequence on the first target resource of the at least one first resource, the first terminal device determines that a beam for sending the first reference signal corresponding to the first sequence on the first target resource is a first target beam. The first sequence may be a sequence included in a sequence combination corresponding to one or more target reference signals sent by the second terminal device.

Optionally, if the second terminal device determines one target reference signal, the second terminal device sends, on the first resource corresponding to the target reference signal, some or all sequences in a sequence combination corresponding to the target reference signal. For example, FIG. 8 is used as an example. If the target reference signal determined by the second terminal device is the reference signal 1, the second terminal device sends, to the first terminal device on the resource 0, the sequence 2 and/or the sequence 3 in {sequence 2, sequence 3} corresponding to the reference signal 1. If the first terminal device detects the sequence 0, the sequence 1, the sequence 2, the sequence 3, the sequence 4, the sequence 5, the sequence 6, and the sequence 7 on the resource 0, the first terminal device receives the sequence 2 and/or the sequence 3 on the resource 0, and the first terminal device determines that a first reference signal corresponding to the sequence 2 and/or the sequence 3 is the reference signal 1, and the beam 0 for sending the reference signal 1 is the first target beam. For another example, FIG. 9 is used as an example. If the target reference signal determined by the second terminal device is the reference signal 1, the second terminal device sends, to the first terminal device on the resource 0, the sequence 1 corresponding to the reference signal 1, and the first terminal device detects the sequence 0, the sequence 1, the sequence 2, and the sequence 3 on the resource 0. If the first terminal device receives the sequence 1, the first terminal device determines that a first reference signal corresponding to the sequence 1 on the resource 0 is the reference signal 1, and the beam 0 for sending the reference signal 1 is the first target beam. If a target reference signal determined by a third terminal device is the reference signal 5, the third terminal device sends the sequence 1 on the resource 1, and the first terminal device detects the sequence 0, the sequence 1, the sequence 2, and the sequence 3 on the resource 1. If the first terminal device receives the sequence 1 on the resource 1, the first terminal device determines that a first reference signal corresponding to the sequence 1 on the resource 1 is the reference signal 5, and the beam 2 for sending the reference signal 5 is also the first target beam. For still another example, FIG. 10 is used as an example. If the target reference signal determined by the second terminal device is the reference signal 1, the second terminal device sends, to the first terminal device on the resource 0, the sequence 1 corresponding to the reference signal 1, and the first terminal device detects the sequence 0, the sequence 1, the sequence 2, and the sequence 3 on the resource 0. If the first terminal device receives the sequence 1, the first terminal device determines that a first reference signal corresponding to the sequence 1 on the resource 0 is the reference signal 1, and the beam 0 for sending the reference signal 1 is the first target beam. If a target reference signal determined by a third terminal device is the reference signal 5, the third terminal device sends the sequence 5 on the resource 1, and the first terminal device detects the sequence 4, the sequence 5, the sequence 6, and the sequence 7 on the resource 1. If the first terminal device receives the sequence 5 on the resource 1, the first terminal device determines that a first reference signal corresponding to the sequence 5 on the resource 1 is the reference signal 5, and the beam 2 for sending the reference signal 5 is also the first target beam.

Optionally, if the second terminal device determines a plurality of target reference signals, the second terminal device sends, on a first resource corresponding to the plurality of target reference signals, some or all of sequences in a sequence combination corresponding to each of the plurality of target reference signals. For example, in FIG. 8, the target reference signals determined by the second terminal device are the reference signal 1 and the reference signal 2, the second terminal device may send the sequence 2, the sequence 3, the sequence 4, and the sequence 5 on the resource 0, and the first terminal device receives the sequence 2 and/or the sequence 3 on the resource 0, in this case, the first terminal device may determine that the beam 0 for sending the reference signal 1 is the first target beam. If the first terminal device receives the sequence 4 and/or the sequence 5 on the resource 0, the first terminal device may determine that the beam 1 for sending the reference signal 2 is the first target beam. If the first terminal device receives the sequence 2 and/or the sequence 3 on the resource 0, and the first terminal device also receives the sequence 4 and/or the sequence 5 on the resource 0, the first terminal device may determine that both the beam 0 for sending the reference signal 1 and the beam 1 for sending the reference signal 2 are the first target beams.

Alternatively, that the sequence combination corresponding to each first reference signal has a binding relationship with the first terminal device may be replaced with that the sequence combination corresponding to each first reference signal corresponds to the first terminal device.

Alternatively, that the sequence combination corresponding to each first reference signal has a binding relationship with the first terminal device may be replaced with that the sequence combination corresponding to each first reference signal is associated with the first terminal device.

Optionally, that the sequence combination corresponding to each first reference signal has a binding relationship with the first terminal device may be replaced with that the sequence combination corresponding to each first reference signal has no binding relationship with a terminal device that sends a sequence in each combination, and different terminal devices may send different sequences on the first target resource.

Optionally, at least two sequences included in the sequence combination corresponding to each first reference signal are sequences that are orthogonal to each other. For example, as shown in FIG. 8, the sequence 0 and the sequence 1 in the sequence combination {sequence 0, sequence 1} corresponding to the reference signal 0 are orthogonal sequences; the sequence 2 and the sequence 3 in the sequence combination {sequence 2, sequence 3} corresponding to the reference signal 1 are orthogonal sequences; and the sequence 4 and the sequence 5 in the sequence combination {sequence 4, sequence 5} corresponding to the reference signal 2 are orthogonal sequences.

Optionally, sequences included in sequence combinations corresponding to different reference signals on a same first resource are sequences that are orthogonal to each other. For example, in FIG. 8, the sequence 0, the sequence 1, the sequence 2, the sequence 3, the sequence 4, the sequence 5, the sequence 6, and the sequence 7 are sequences that are orthogonal to each other. As shown in FIG. 9, the sequence 0, the sequence 1, the sequence 2, and the sequence 3 are sequences that are orthogonal to each other. As shown in FIG. 10, the sequence 0, the sequence 1, the sequence 2, and the sequence 3 are sequences that are orthogonal to each other, and the sequence 4, the sequence 5, the sequence 6, and the sequence 7 are sequences that are orthogonal to each other.

Optionally, the first terminal device detects, on the at least one first resource by using all first beams in a plurality of first beams for sending a plurality of first reference signals corresponding to each first resource, sequences included in the sequence combinations. For example, as shown in FIG. 8, the first terminal device may detect the sequence 0, the sequence 1, the sequence 2, the sequence 3, the sequence 4, the sequence 5, the sequence 6, and the sequence 7 on the resource 0 by using the beam 0 and the beam 1, and the first terminal device may detect the sequence 0, the sequence 1, the sequence 2, the sequence 3, the sequence 4, the sequence 5, the sequence 6, and the sequence 7 on the resource 1 by using the beam 2 and the beam 3. As shown in FIG. 9, the first terminal device may detect the sequence 0, the sequence 1, the sequence 2, and the sequence 3 on the resource 0 by using the beam 0 and the beam 1, and the first terminal device may detect the sequence 0, the sequence 1, the sequence 2, and the sequence 3 on the resource 1 by using the beam 2 and the beam 3. As shown in FIG. 10, the first terminal device may detect the sequence 0, the sequence 1, the sequence 2, and the sequence 3 on the resource 0 by using the beam 0 and the beam 1, and the first terminal device may detect the sequence 4, the sequence 5, the sequence 6, and the sequence 7 on the resource 1 by using the beam 2 and the beam 3.

Optionally, the first terminal device and the second terminal device may determine, based on an identifier of the first terminal device, a sequence combination corresponding to each first reference signal. Optionally, for a case in which the second terminal device obtains the identifier of the first terminal device, refer to the description of S430.

Optionally, one sequence may be from one sequence set, and different sequences come from different sequence sets. For example, the second terminal device and the first terminal device may determine, in the sequence set, the sequence combination corresponding to the first reference signal through a modulo operation performed on N based on the identifier of the first terminal device, where N is a quantity of sequences included in the sequence set. As shown in FIG. 9, there are four sequences in total: the sequence 0, the sequence 1, the sequence 2, and the sequence 3, and there may be four sequence sets: a sequence set 0, a sequence set 1, a sequence set 2, and a sequence set 3. The first terminal device and the second terminal device may determine the sequence 0 in the sequence set 0 through a modulo operation performed by the first terminal device on N0, where N0 is a quantity of sequences included in the sequence set 0. The first terminal device and the second terminal device may determine the sequence 1 in the sequence set 1 through a modulo operation performed by the first terminal device on N1, where N1 is a quantity of sequences included in the sequence set 1. The first terminal device and the second terminal device may determine the sequence 2 in the sequence set 2 through a modulo operation performed by the first terminal device on N2, where N2 is a quantity of sequences included in the sequence set 2. The first terminal device and the second terminal device may determine the sequence 3 in the sequence set 3 through a modulo operation performed by the first terminal device on N3, where N3 is a quantity of sequences included in the sequence set 3. Sequences included in each of the sequence set 0, the sequence set 1, the sequence set 2, and the sequence set 3 have no intersection. N0, N1, N2, and N3 are positive integers.

Optionally, if one first reference signal corresponds to a plurality of sequence sets, a quantity of sequences included in a sequence combination corresponding to one first reference signal is the same as a quantity of the plurality of sequence sets. For example, in FIG. 8, there are eight sequences in total: the sequence 0, the sequence 1, the sequence 2, the sequence 3, the sequence 4, the sequence 5, the sequence 6, and the sequence 7, and there may be eight sequence sets: a sequence set 0, a sequence set 1, a sequence set 2, a sequence set 3, a sequence set 4, a sequence set 5, a sequence set 6, and a sequence set 7. The first terminal device and the second terminal device may determine the sequence 0 in the sequence set 0 through a modulo operation performed by the first terminal device on N0, where N0 is a quantity of sequences included in the sequence set 0. The first terminal device and the second terminal device may determine the sequence 1 in the sequence set 1 through a modulo operation performed by the first terminal device on N1, where N1 is a quantity of sequences included in the sequence set 1. The first terminal device and the second terminal device may determine the sequence 2 in the sequence set 2 through a modulo operation performed by the first terminal device on N2, where N2 is a quantity of sequences included in the sequence set 2. The first terminal device and the second terminal device may determine the sequence 3 in the sequence set 3 through a modulo operation performed by the first terminal device on N3, where N3 is a quantity of sequences included in the sequence set 3. The first terminal device and the second terminal device may determine the sequence 4 in the sequence set 4 through a modulo operation performed by the first terminal device on N4, where N4 is a quantity of sequences included in the sequence set 4. The first terminal device and the second terminal device may determine the sequence 5 in the sequence set 5 through a modulo operation performed by the first terminal device on N5, where N5 is a quantity of sequences included in the sequence set 5. The first terminal device and the second terminal device may determine the sequence 6 in the sequence set 6 through a modulo operation performed by the first terminal device on N6, where N6 is a quantity of sequences included in the sequence set 6. The first terminal device and the second terminal device may determine the sequence 7 in the sequence set 7 through a modulo operation performed by the first terminal device on N7, where N7 is a quantity of sequences included in the sequence set 7. Sequences included in each of the sequence set 0, the sequence set 1, the sequence set 2, the sequence set 3, the sequence set 4, the sequence set 5, the sequence set 6, and the sequence set 7 have no intersection. N0, N1, N2, N3, N4, N5, N6 and N7 are positive integers.

S740 to S760 are respectively the same as S440 to S460.

Alternatively, S710, S720, S730, S640, and S650 may also form an embodiment.

In the method 700, when the first terminal device receives, on any at least one first resource, a sequence corresponding to a first reference signal, the first terminal device may determine a target reference signal based on a correspondence between a sequence included in each sequence combination on the first resource and the at least one first reference signal, and determine a beam for sending the target reference signal as the first target beam. In addition, sidelink control information sent by the first terminal device by using the first target beam may include an index of the target reference signal. In this way, the second terminal device may determine, as an index of the target reference signal determined by the second terminal device, the index of the target reference signal included in the sidelink control information, and an identifier of a destination address of the sidelink control information as a preset value or the identifier of the first terminal device. The second terminal device switches the beam from a predefined beam to at least one second beam, to train the beam of the second terminal device. Correspondingly, a second terminal device determines the second target beam from the at least one second beam. In conclusion, the first target beam of the first terminal device can be obtained through training, and the second target beam of the second terminal device can also be obtained through training. In addition, a sequence combination corresponding to any first reference signal has no binding relationship with a device that sends a sequence, and has a binding relationship with a first terminal device that receives a sequence in the sequence combination. Even if different second terminal devices and third terminal devices separately send different sequences on the first target resource, the first terminal device may separately determine first target beams corresponding to the different sequences. In this case, the second terminal device or the third terminal device does not need to contend for reporting a sequence. This can reduce a delay.

It may be understood that, in embodiments of this application, a pre-configuration (pre-configuration) may be understood as being set before delivery, or specified in a protocol, or predefined.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the method embodiments. For brevity, details are not described herein again.

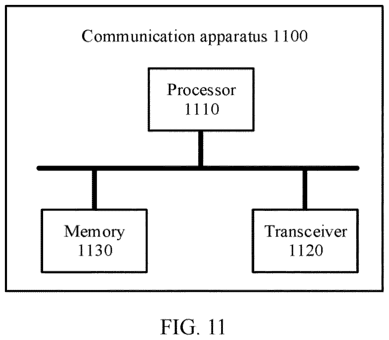

FIG. 11 shows a communication apparatus 1100 according to an embodiment of this application. The communication apparatus 1100 includes a processor 1110 and a transceiver 1120. The processor 1110 and the transceiver 1120 communicate with each other through an internal connection path, and the processor 1110 is configured to execute instructions, to control the transceiver 1120 to send a signal and/or receive a signal.

Optionally, the communication apparatus 1100 may further include a memory 1130. The memory 1130 communicates with the processor 1110 and the transceiver 1120 through internal connection paths. The memory 1130 is configured to store instructions, and the processor 1110 may execute the instructions stored in the memory 1130. In a possible implementation, the communication apparatus 1100 is configured to implement procedures and steps corresponding to the first terminal device in the foregoing method embodiments. In another possible implementation, the communication apparatus 1100 is configured to implement procedures and steps corresponding to the second terminal device in the foregoing method embodiments.

It should be understood that the communication apparatus 1100 may be specifically the first terminal device or the second terminal device in the foregoing embodiments, or may be a chip or a chip system. Correspondingly, the transceiver 1120 may be a transceiver circuit of the chip. This is not limited herein. Specifically, the communication apparatus 1100 may be configured to perform steps and/or procedures corresponding to the terminal device, an access network device, a master access network device, or a secondary access network device in the foregoing method embodiments. Optionally, the memory 1130 includes a read-only memory and a random access memory, and provide instructions and data to the processor. A part of the memory may further include a non-volatile random access memory. For example, the memory may further store information of a device type. The processor 1110 may be configured to execute the instructions stored in the memory, and when the processor 1110 executes the instructions stored in the memory, the processor 1110 is configured to perform the steps and/or procedures corresponding to the first terminal device or the second terminal device in the method embodiments.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware assembly. It may implement or perform the methods, the steps, and logical block diagrams that are disclosed in embodiments of this application. The general-purpose processor may be a microprocessor, the processor may be any conventional processor, or the like. The steps in the methods disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the steps or procedures performed by the first terminal device or the second terminal device in the foregoing method embodiments.

According to the method provided in embodiments of this application, this application further provides a computer-readable storage medium. The computer-readable storage medium stores program code. When the program code is run on a computer, the computer is enabled to perform the steps or procedures performed by the first terminal device or the second terminal device in the foregoing method embodiments.

According to the methods provided in embodiments of this application, this application further provides a communication system, including one or more first terminal devices and one or more second terminal devices.

The foregoing apparatus embodiments completely correspond to the method embodiments. A corresponding module or unit performs a corresponding step. For example, a communication unit (a transceiver) performs a receiving step or a sending step in the method embodiments, and a processing unit (a processor) may perform steps other than the sending step and the receiving step. A function of a specific unit may be based on a corresponding method embodiment. There may be one or more processors.

In this application, "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing or future protocol.

It should be understood that the term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

A person of ordinary skill in the art may be aware that, in combination with illustrative logical blocks (illustrative logical block) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam determining method, wherein the method is applicable to a first terminal device, and the method comprises:
sending at least one first reference signal by using at least one first beam, wherein the at least one first reference signal corresponds to at least one first resource; and
detecting a first sequence on the at least one first resource, wherein the first sequence has a binding relationship with the first terminal device, a resource on which the first sequence is received is a first target resource, a beam for sending a first reference signal corresponding to the first target resource is a first target beam, and the at least one first beam comprises the first target beam.

2. The method according to claim 1, wherein the method further comprises:
detecting a second sequence on the at least one first resource, wherein a resource on which the second sequence is received is the first target resource, and the second sequence has a binding relationship with the first terminal device.

3. The method according to claim 2, wherein the first sequence comes from a second terminal device, the second sequence comes from a third terminal device, and the first terminal device does not distinguish between a sending device for the first sequence and a sending device for the second sequence.

4. The method according to claim 2 or 3, wherein the detecting a second sequence on the at least one first resource comprises:
detecting the second sequence on each of the at least one first resource by using a first beam for sending a first reference signal corresponding to each first resource.

5. The method according to any one of claims 1 to 4, wherein the detecting a first sequence on the at least one first resource comprises:
detecting the first sequence on each of the at least one first resource by using the first beam for sending the first reference signal corresponding to each first resource.

6. The method according to any one of claims 1 to 5, wherein each of the at least one first reference signal indicates an identifier of the first terminal device.

7. The method according to claim 6, wherein each first reference signal comprises an identifier of a primary synchronization sequence and an identifier of a secondary synchronization sequence, the identifier of the primary synchronization sequence and the identifier of the secondary synchronization sequence indicate an identifier of a sidelink synchronization signal SLSS, and the identifier of the SLSS is the identifier of the first terminal device.

8. The method according to claim 6, wherein a physical sidelink broadcast channel PSBCH in each first reference signal comprises the identifier of the first terminal device.

9. The method according to any one of claims 1 to 5, wherein a sidelink control channel associated with the at least one first reference signal comprises an identifier of the first terminal device.

10. The method according to any one of claims 6 to 9, wherein that the first sequence has a binding relationship with the first terminal device is specifically: the first sequence is determined based on the identifier of the first terminal device.

11. The method according to claim 10, wherein that the first sequence is determined based on the identifier of the first terminal device is specifically: the first sequence is determined in a sequence set through a modulo operation performed on N based on the identifier of the first terminal device, wherein N is a quantity of sequences comprised in the sequence set, the sequence set comprises the first sequence, and N is a positive integer.

12. The method according to any one of claims 1 to 9, wherein that the first sequence has a binding relationship with the first terminal device is specifically: the first sequence is the secondary synchronization sequence in each first reference signal sent by the first terminal device, and secondary synchronization sequences in all first reference signals are the same.

13. The method according to any one of claims 1 to 12, wherein each of the at least one first reference signal comprises a frame sequence number for sending each first reference signal and a slot sequence number for sending each first reference signal.

14. The method according to any one of claims 1 to 12, wherein a sidelink data channel associated with each of the at least one first reference signal comprises an index of the first reference signal associated with the sidelink data channel, or a sidelink control channel associated with each of the at least one first reference signal comprises an index of the first reference signal associated with the sidelink control channel.

15. The method according to claim 13 or 14, wherein an index of each first reference signal indicates the first reference signal; and
a first correspondence indicates that the index of each of the at least one first reference signal corresponds to each of the at least one first resource, and the first correspondence is configured by a network device or pre-configured; or
a physical sidelink data channel associated with each of the at least one first reference signal indicates a first resource corresponding to an index of the first reference signal associated with the physical sidelink data channel; or
a physical sidelink control channel associated with each of the at least one first reference signal indicates a first resource corresponding to an index of the first reference signal associated with the physical sidelink control channel; or
the PSBCH comprised in each first reference signal indicates a first resource corresponding to the first reference signal in which the PSBCH is located.

16. The method according to any one of claims 13 to 15, wherein the method further comprises:
sending sidelink control information by using the first target beam, wherein the sidelink control information comprises an index of a target reference signal, and an identifier of a source address of the sidelink control information is the identifier of the first terminal device; and
sending at least one second reference signal on a resource associated with the sidelink control information, wherein
an identifier of a destination address of the sidelink control information is the identifier of the first terminal device, or an identifier of a destination address of the sidelink control information is a preset value.

17. The method according to any one of claims 13 to 15, wherein the method further comprises:
sending at least one second reference signal on a second target resource corresponding to a target reference signal, wherein
the physical sidelink data channel associated with each of the at least one first reference signal indicates a second resource corresponding to the index of the first reference signal associated with the physical sidelink data channel, and the second resource corresponding to the index of the first reference signal associated with the physical sidelink data channel comprises the second target resource; or
the physical sidelink control channel associated with each of the at least one first reference signal indicates a second resource corresponding to the index of the first reference signal associated with the physical sidelink control channel, and the second resource corresponding to the index of the first reference signal associated with the physical sidelink control channel comprises the second target resource; or
the PSBCH comprised in each first reference signal indicates a second resource corresponding to the first reference signal in which the PSBCH is located, and the second resource corresponding to the first reference signal in which the PSBCH is located comprises the second target resource.

18. The method according to claim 16 or 17, wherein a pattern of the at least one first reference signal and/or a pattern of the at least one second reference signal are/is a pre-configured pattern corresponding to a first resource pool; or
a pattern of the at least one first reference signal and/or a pattern of the at least one second reference signal are/is a pattern that is configured by the network device and that corresponds to a first resource pool, wherein
the first resource pool comprises each of the at least one first resource and each of at least one second resource.

19. Abeam determining method, wherein the method is applicable to a second terminal device, and the method comprises:
receiving at least one first reference signal, wherein the at least one first reference signal corresponds to at least one first resource;
determining a target reference signal from the at least one first reference signal; and
sending a first sequence to a first terminal device on a first target resource corresponding to the target reference signal, wherein the first sequence has a binding relationship with the first terminal device.

20. The method according to claim 19, wherein the sending a first sequence to a first terminal device on a first target resource corresponding to the target reference signal comprises:
sending, by using a predefined beam, the first sequence to the first terminal device on the first target resource corresponding to the target reference signal.

21. The method according to claim 19 or 20, wherein each of the at least one first reference signal indicates an identifier of the first terminal device.

22. The method according to claim 21, wherein each first reference signal comprises an identifier of a primary synchronization sequence and an identifier of a secondary synchronization sequence, the identifier of the primary synchronization sequence and the identifier of the secondary synchronization sequence indicate an identifier of a sidelink synchronization signal SLSS, and the identifier of the SLSS is the identifier of the first terminal device.

23. The method according to claim 21, wherein a physical sidelink broadcast channel PSBCH in each first reference signal comprises the identifier of the first terminal device.

24. The method according to claim 19 or 20, wherein a sidelink control channel associated with the at least one first reference signal comprises an identifier of the first terminal device.

25. The method according to any one of claims 21 to 24, wherein that the first sequence has a binding relationship with the first terminal device is specifically: the first sequence is determined based on the identifier of the first terminal device.

26. The method according to claim 25, wherein that the first sequence is determined based on the identifier of the first terminal device is specifically: the first sequence is determined in a sequence set through a modulo operation performed on N based on the identifier of the first terminal device, wherein N is a quantity of sequences comprised in the sequence set, and the sequence set comprises the first sequence.

27. The method according to any one of claims 19 to 24, wherein that the first sequence has a binding relationship with the first terminal device is specifically: the first sequence is the secondary synchronization sequence in each first reference signal sent by the first terminal device, and secondary synchronization sequences in all first reference signals are the same.

28. The method according to any one of claims 19 to 27, wherein each of the at least one first reference signal comprises a frame sequence number for sending each first reference signal and a slot sequence number for sending each first reference signal, and the method further comprises:
determining an index of the target reference signal based on a frame sequence number for sending the target reference signal and a slot sequence number for sending the target reference signal.

29. The method according to any one of claims 19 to 27, wherein a sidelink data channel associated with each of the at least one first reference signal comprises an index of the first reference signal associated with the sidelink data channel, or a sidelink control channel associated with each of the at least one first reference signal comprises an index of the first reference signal associated with the sidelink control channel.

30. The method according to claim 28 or 29, wherein an index of each of the at least one first reference signal indicates the first reference signal; and
a first correspondence indicates that the index of each of the at least one first reference signal corresponds to the at least one first resource, and the first correspondence is configured by a network device or pre-configured; or
a physical sidelink data channel associated with each of the at least one first reference signal indicates a first resource corresponding to an index of the first reference signal associated with the physical sidelink data channel; or
a physical sidelink control channel associated with each of the at least one first reference signal indicates a first resource corresponding to an index of the first reference signal associated with the physical sidelink control channel; or
the PSBCH comprised in each first reference signal indicates a first resource corresponding to the first reference signal in which the PSBCH is located.

31. The method according to any one of claims 28 to 30, wherein the method further comprises:
receiving sidelink control information by using a predefined beam, wherein the sidelink control information comprises the index of the target reference signal, and an identifier of a source address of the sidelink control information is the identifier of the first terminal device;
receiving at least one second reference signal on a resource associated with the sidelink control information by using at least one second beam; and
determining a second target beam of the second terminal device from the at least one second beam based on reference signal received power or a signal to interference plus noise ratio of the at least one second reference signal, wherein
an identifier of a destination address of the sidelink control information is the identifier of the first terminal device, or an identifier of a destination address of the sidelink control information is a preset value.

32. The method according to any one of claims 28 to 30, wherein the method further comprises:
receiving at least one second reference signal on a second target resource corresponding to the target reference signal by using at least one second beam; and
determining a second target beam of the second terminal device from the at least one second beam based on reference signal received power or a signal to interference plus noise ratio of the at least one second reference signal, wherein
the physical sidelink data channel associated with each of the at least one first reference signal indicates a second resource corresponding to the index of the first reference signal associated with the physical sidelink data channel, and the second resource corresponding to the index of the first reference signal associated with the physical sidelink data channel comprises the second target resource; or
the physical sidelink control channel associated with each of the at least one first reference signal of at least one reference signal indicates a second resource corresponding to the index of the first reference signal associated with the physical sidelink control channel, and the second resource corresponding to the index of the first reference signal associated with the physical sidelink control channel comprises the second target resource; or
the PSBCH comprised in each first reference signal indicates a second resource corresponding to the first reference signal in which the PSBCH is located, and the second resource corresponding to the first reference signal in which the PSBCH is located comprises the second target resource.

33. The method according to claim 31 or 32, wherein a pattern of the at least one first reference signal and/or a pattern of the at least one second reference signal are/is a pre-configured pattern corresponding to a first resource pool; or
a pattern of the at least one first reference signal and/or a pattern of the at least one second reference signal are/is a pattern that is configured by the network device and that corresponds to a first resource pool, wherein
the first resource pool comprises each of the at least one first resource and each of at least one second resource.

34. An electronic device, comprising a processor, wherein the processor is coupled to a memory, and the processor is configured to execute a computer program or instructions stored in the memory, so that the electronic device implements the method according to any one of claims 1 to 33.

35. A computer-readable storage medium, wherein the computer-readable storage medium stores computer instructions, and when the computer instructions are run on an electronic device, the electronic device is enabled to perform the method according to any one of claims 1 to 33.
